Europäisches Patentamt

European Patent Office

Office européen des brevets

(19)

(11) **EP 1 607 191 A1**

(12) **EUROPEAN PATENT APPLICATION**
published in accordance with Art. 158(3) EPC

(43) Date of publication:
    **21.12.2005 Bulletin 2005/51**

(51) Int Cl.⁷: **B25J 5/00**, B25J 13/00

(21) Application number: **04722665.9**

(86) International application number:
    **PCT/JP2004/003917**

(22) Date of filing: **23.03.2004**

(87) International publication number:
    **WO 2004/082900 (30.09.2004 Gazette 2004/40)**

(84) Designated Contracting States:
    **AT BE BG CH CY CZ DE DK EE ES FI FR GB GR
    HU IE IT LI LU MC NL PL PT RO SE SI SK TR**
    Designated Extension States:
    **AL LT LV MK**

(30) Priority: **23.03.2003 JP 2003122886**

(71) Applicant: **SONY CORPORATION**
    **Tokyo 141-0001 (JP)**

(72) Inventor: **MORIDAIRA, Tomohisa,**
    **c/o Sony Corporation**
    **Tokyo 141-0001 (JP)**

(74) Representative: **Pilch, Adam John Michael**
    **D Young & Co**
    **120 Holborn**
    **London EC1N 2DY (GB)**

(54) **ROBOT DEVICE AND METHOD OF CONTROLLING THE SAME**

(57)    The present invention is to realize a robot apparatus and a control method thereof that can remarkably improve the entertainment ability. In a robot apparatus with plural leg parts having multi-step of joint mechanisms respectively connected to a body part and a control method thereof, it is designed so that after the external and/or the internal state was detected, whether or not the above detected external and/or internal state is in the state lifted in the user's arms or the lifted state is determined, and a driving system is controlled so as to stop the operation of each joint mechanism based on the above determination result.

FIG. 6

**Description**

Technical Field

The present invention relates to a robot apparatus and a control method thereof, and is suitably applied to a humanoid-type robot, for example.

Background Art

In recent years, bipedal humanoid-type robots have been developed in many companies or the like, and merchandised. And in these robots, also there is a type in that various external sensors such as a charge coupled device (CCD) camera and a microphone are mounted, the external state is recognized based on the outputs of these external sensors, and the robot can autonomously act based on the recognition results.

Furthermore, recently, in a comparatively small robot in autonomous-type humanoid-type robots, also a type having such function that when the robot was lifted-in-arms by the user, detects the lifted-in-arms state, and shifts its own posture to a predetermined posture considered to be easy to hold for the user (hereinafter, this is referred to as a lifted-in-arms posture), and relaxes the whole body, according to the above detection result, has been proposed.

Description of the Invention

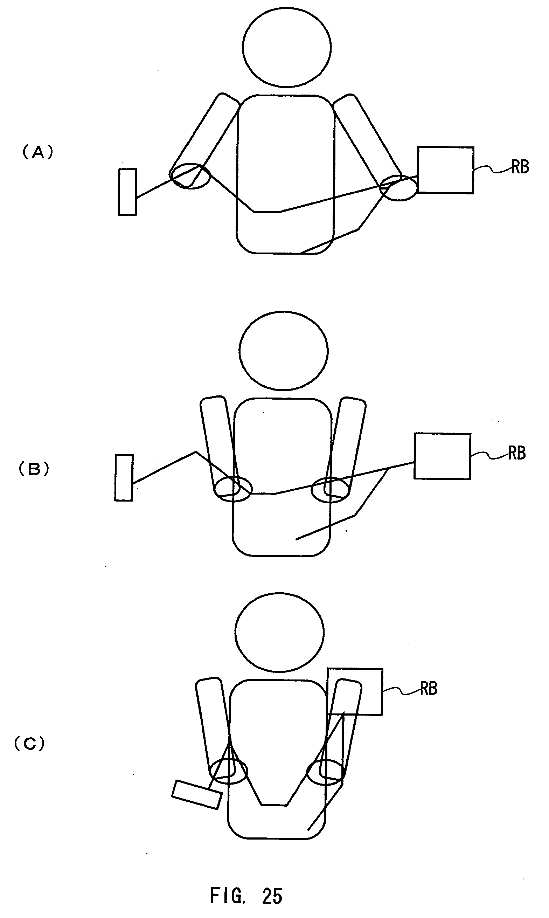

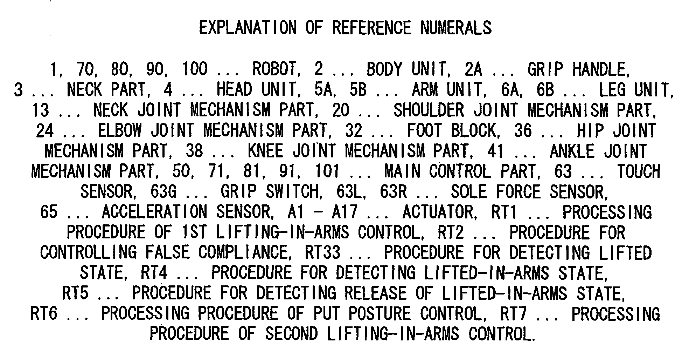

However, as shown in Fig. 25(A), there is a problem that even if a robot RB shifted its own posture to a predetermined lifted-in-arms posture as described above, if the joint parts are as they are in a inflexible state, it makes the user feel hard to hold due to the bias of the center of gravity of the robot RB or the like (Fig. 25(B)), conversely even if the joint parts are too made to be in a flexible state by making the robot RB into a relaxed state, it makes the user feel hard to hold because the robot RB is unstable in the user's arms (Fig. 25(C)).

Furthermore, in the state where the user lifted up and held the robot RB in his/her arms, also it can be considered that the user wants to change the posture of the robot RB into various postures with his/her hands as if it is a stuffed doll. For that, the robot RB must be made into a perfectly relaxed state. However, if it is made as the above, there is a problem that it brings a bad effect in hardware such that electromotive force is generated in various actuators.

Thereupon, it can be considered that by keeping constant rigidity on each joint while making it flexible in some degree, and putting the control on the robot so as to accord with the way of holding by the user, a feeling of holding the robot in the user s arms can be made to close to a feeling of holding when the user lifted a child in his/her arms, and also a bad effect in hardware such that electromotive force is generated in various actuators can be effectively prevented.

On the other hand, in the robot having the aforementioned lifting-in-arms control function, a mechanism to certainly detect that the robot was lifted in the user s arms is necessary. For instance, when the robot was lifted in the user s arms, if the robot cannot detect this and operates similarly to the state put on the floor, it can make the user get unexpected injury, by that the user's finger is pinched in the joint part and the arms and the legs of the robot bumps against the user.

Furthermore, in the robot presupposing to be lifted in the user s arms as the above, it is necessary to consider not only the posture and the state of the robot in the lifted-in-arms state but also the posture and the state of the body of the robot when it is put down on the floor.

Practically, as the state where the above lifted-in-arms posture and relaxed state are kept also immediately before it will be put down on the floor and after it was put down, the deal of the robot in putting down is troublesome. Furthermore, although the robot is humanoid type, it makes the user feel unnaturality not having a feeling of life. Therefore, there is a problem that the robot lacks in entertainment ability as an entertainment robot.

Moreover, since the aforementioned lifted-in-arms posture and relaxed state are unstable posture and state for the robot, also it is feared that the robot falls by losing balance after landing, and a scratch in the body or an accident such that a contained device is broken occurs.

Disclosure of the Invention

The present invention has been done by considering the above points, and provides a robot apparatus and a control method thereof that can remarkably improve the entertainment ability and safety.

To solve the above problems, according to the present invention, in a robot apparatus having a movable part, operating point detecting means for detecting an operating point at which external force operates on the robot apparatus, center of gravity detecting means for detecting the center of gravity of the robot apparatus, and landing planned area calculating means for calculating a landing planned area in which a part of the robot apparatus will contact with the floor are provided. The control means controls drive means when the robot apparatus rose from the floor by external force, in order to control the movable part so that the operating point and the center of gravity are contained in the space on the landing planned area.

As a result, this robot apparatus can effectively prevent a fall after landing, and also can appear such gesture as crouching in landing that human beings generally do.

Furthermore, according to the present invention, in a method for controlling a robot apparatus having a movable part, a first step of detecting an operating point at which external force operates on the robot apparatus, and the center of gravity of the robot apparatus, and also calculating a landing planned area in which a part of the robot apparatus will contact with the floor, and a second step of controlling the movable part so that when the robot apparatus rose from the floor by external force, the operating point and the center of gravity are contained in the space on the landing planned area are provided.

As a result, according to this method for controlling a robot apparatus, a fall of the robot apparatus after landing can be effectively prevented, and also it can make the robot apparatus appear such gesture as crouching in landing that human beings generally do.

Furthermore, according to the present invention, in a robot apparatus having a movable part, center of gravity detecting means for detecting the center of gravity of the robot apparatus, landing part calculating means for calculating the contact part of the robot apparatus with the floor, and distance calculating means for calculating the distance between the center of gravity of the robot apparatus and the landing part are provided. Lifting-in-arms detection is performed based on the distance between the center of gravity of the robot apparatus and the landing part.

As a result, in this robot apparatus, that the robot apparatus was lifted can be surely detected without a special sensor or the like. Thus, the occurrence of injury to the user caused by the operation of the robot apparatus in the lifted state or the like can be effectively prevented, and safety of the user can be maintained.

Furthermore, according to the present invention, in a method for controlling a robot apparatus having a movable part, a first step of detecting the center of gravity of the robot apparatus, and also calculating the contact part of the robot apparatus with the floor, and a second step of calculating the distance between the center of gravity of the robot apparatus and the contact part, and a third step of performing lifting-in-arms detection based on the calculated distance are provided.

As a result, according to this method for controlling a robot apparatus, that it was lifted can be surely detected without a special sensor or the like. Thus, the occurrence of injury to the user caused by the operation of the robot apparatus in the lifted state or the like can be effectively prevented, and safety of the user can be maintained.

Furthermore, according to the present invention, in a robot apparatus with plural leg parts having a multi-step joint mechanism respectively connected to the body part, sensor means for detecting the external and/or the internal state, state determining means for determining whether or not the external and/or the internal state detected by the sensor means is the state lifted-in-arms with the user's arms or the lifted state, and control means for controlling a driving system so as to stop the operation of each joint mechanism, based on the determination result by the state determining means are provided.

As a result, in this robot apparatus, moving each leg part in the state lifted in the user s arms or the lifted by the user is prevented. Thereby, safety of the user can be maintained.

Furthermore, according to the present invention, in a robot apparatus with plural leg parts having a multi-step joint mechanism respectively connected to the body part, control means for controlling a driving system to operate each joint mechanism so as to make the posture of each leg part accord with the user s arms when the robot apparatus is in the state lifted in the user's arms is provided.

As a result, in this robot apparatus, when the robot apparatus is in the state lifted in the user s arms, it can make the user feel a reaction close to lifting a child in his/her arms.

Furthermore, according to the present invention, in a robot apparatus with plural leg parts having a multi-step joint mechanism respectively connected to the body part, control means for determining the posture of the body part when the state lifted-in-arms with the user's arms or the lifted state was released, and controlling a driving system to operate each joint mechanism corresponding to each leg part according to the above determination result is provided.

As a result, this robot apparatus can maintain safety and can appear naturality of looks after the state lifted-in-arms with the user s arms or the lifted state was released.

Furthermore, according to the present invention, in a method for controlling a robot apparatus with plural leg parts having a multi-step joint mechanism respectively connected to the body part, after the external and/or the internal state was detected, whether or not the above detected external and/or internal state is the state lifted in the user's arms or the lifted state is determined, and a driving system is controlled to stop the operation of each joint mechanism based on the above determination result.

As a result, in this method for controlling a robot apparatus, moving each leg part in the state lifted in the user s arms or lifted by the user is prevented. Thereby, safety of the user can be maintained.

Furthermore, according to the present invention, in a method for controlling a robot apparatus with plural leg parts having a multi-step joint mechanism respectively connected to the body part, when the robot apparatus is in the state lifted in the user s arms, a driving system to operate each joint mechanism is controlled so as to make the posture of each leg part accord with the user s arms.

As a result, in this method for controlling a robot apparatus, when the robot apparatus is in the state lifted in the user s arms, it can make the user feel a reaction close to lifting a child in his/her arms.

Furthermore, according to the present invention, in a method for controlling a robot apparatus with plural leg parts having a multi-step joint mechanism respectively connected to the body part, the posture of the body part when the state lifted-in-arms with the user's arms or the lifted state was released is determined, and a driving system to operate each joint mechanism corresponding to each leg part is controlled according to the above determination result.

As a result, in this method for controlling a robot apparatus, safety can be maintained and naturality of looks can be appeared after the state lifted in the user s arms or the state lifted by the user was released.

According to the present invention, in a robot apparatus having a movable part, operating point detecting means for detecting an operating point at which external force operates on the robot apparatus, center of gravity detecting means for detecting the center of gravity of the robot apparatus, and landing planned area calculating means for calculating a landing planned area in which a part of the robot apparatus will contact with the floor are provided. The control means controls drive means when the robot apparatus rose from the floor by external force, in order to control the movable part so that the operating point and the center of gravity are contained in the space on the landing planned area. Thereby, a fall after landing can be effectively prevented, and also such gesture as crouching in landing that as if human beings do can be appeared. Thus, a robot apparatus that can remarkably improve the entertainment ability can be realized.

Furthermore, according to the present invention, in a method for controlling a robot apparatus having a movable part, a first step of detecting an operating point at which external force operates on the robot apparatus, and the center of gravity of the robot apparatus, and also calculating a landing planned area in which a part of the robot apparatus will contact with the floor, and a second step of controlling the movable part so that when the robot apparatus rose from the floor by external force, the operating point and the center of gravity are contained in the space on the landing planned area are provided. Thereby, a fall of the robot apparatus after landing can be effectively prevented, and also it can make the robot apparatus appear such gesture as crouching in landing that as if human beings do. Thus, a method for controlling a robot apparatus that can remarkably improve the entertainment ability can be realized.

Furthermore, according to the present invention, in a robot apparatus having a movable part, center of gravity detecting means for detecting the center of gravity of the robot apparatus, landing part calculating means for calculating the contact part of the robot apparatus with the floor, and distance calculating means for calculating the distance between the center of gravity and the landing part of the robot apparatus are provided. Lifting-in-arms detection is performed based on the distance between the center of gravity and the landing part of the robot apparatus. Thereby, that the robot apparatus was lifted can be surely detected without a special sensor or the like. Therefore, the occurrence of injury to the user caused by the operation of the robot apparatus in the lifting state can be effectively prevented, and safety of the user can be maintained. Thus, a robot apparatus that can remarkably improve the entertainment ability can be realized.

Furthermore, according to the present invention, in a method for controlling a robot apparatus having a movable part, a first step of detecting the center of gravity of the robot apparatus, and also calculating the contact part of the robot apparatus with the floor, and a second step of calculating the distance between the center of gravity of the robot apparatus and the contact part, and a third step of performing lifting-in-arms detection based on the calculated distance are provided. Thereby, that the robot apparatus was lifted can be surely detected without a special sensor or the like. Therefore, the occurrence of injury to the user caused by the operation of the robot apparatus in the lifting state can be effectively prevented, and safety of the user can be maintained. Thus, a method for controlling a robot apparatus that can remarkably improve the entertainment ability can be realized.

Furthermore, according to the present invention, in a robot apparatus with plural leg parts having a multi-step joint mechanism respectively connected to the body part, sensor means for detecting the external and/or the internal state, state determining means for determining whether or not the external and/or the internal state detected by the sensor means is the state lifted in the user's arms or the lifted state, and control means for controlling a driving system so as to stop the operation of each joint mechanism based on the determination result by the state determining means are provided. Thereby, safety of the user in the state lifted in the user s arms or lifted by the user can be maintained. Thus, a robot apparatus that can remarkably improve the entertainment ability can be realized.

Furthermore, according to the present invention, in a robot apparatus with plural leg parts having a multi-step joint mechanism respectively connected to the body part, control means for controlling a driving system to operate each joint mechanism so as to make the posture of each leg part accord with the user s arms when the robot apparatus is in the state lifted in the user s arms is provided. Thereby, when the robot apparatus is in the state lifted in the user s arms, it can make the user feel a reaction close to lifting a child in his/her arms. Thus, a robot apparatus that can remarkably improve the entertainment ability can be realized.

Furthermore, according to the present invention, in a robot apparatus with plural leg parts having a multi-step joint mechanism respectively connected to the body part, control means for determining the posture of the body part when the state lifted in the user s arms or the lifted state was released, and controlling a driving system to operate each joint mechanism corresponding to each leg part according to the above determination result is provided. Thereby, safety can be maintained and naturality of looks can be appeared after the state lifted in the user s arms or the lifted state was released. Thus, a robot apparatus that can remarkably improve the entertainment ability can be realized.

Furthermore, according to the present invention, in a method for controlling a robot apparatus with plural leg parts having a multi-step joint mechanism respectively connected to the body part, after the external and/or the internal state was detected, whether or not the above detected external and/or internal state is the state lifted in the user s arms or the state lifted by the user is determined, and a driving system is controlled to stop the operation of each joint mechanism based on the above determination result. Thereby, safety of the user in the state lifted in the user s arms or lifted by the user can be maintained. Thereby, a method for controlling a robot apparatus that can remarkably improve the entertainment ability can be realized.

Furthermore, according to the present invention, in a method for controlling a robot apparatus with plural leg parts having a multi-step joint mechanism respectively connected to the body part, when the robot apparatus is in the state lifted-in-arms with the user s arms, a driving system to operate each joint mechanism is controlled so as to make the posture of each leg part accord with the user s arms. Thereby, when the robot apparatus is in the state lifted in the user s arms, it can make the user feel a reaction close to lifting a child in the user s arms. Thus, a method for controlling a robot apparatus that can remarkably improve the entertainment ability can be realized.

Furthermore, according to the present invention, in a method for controlling a robot apparatus with plural leg parts having a multi-step joint mechanism respectively connected to the body part, the posture of the body part when the state lifted in the user s arms or the state lifted by the user was released is determined, and a driving system to operate each joint mechanism corresponding to each leg part is controlled according to the above determination result. Thereby, safety can be maintained and naturality of looks can be appeared after the lifted-in-arms state or the lifted state was released. Thus, a method for controlling a robot apparatus that can remarkably improve the entertainment ability can be realized.

Brief Description of the Drawings

Fig. 1 is a perspective view showing the external structure of a robot.
Fig. 2 is a perspective view showing the external structure of the robot.
Fig. 3 is a conceptual view showing the external structure of the robot.
Fig. 4 is a block diagram showing the internal structure of the robot.
Fig. 5 is a block diagram showing the internal structure of the robot.
Fig. 6 is a flowchart for explaining the processing procedure of first lifting-in-arms control.
Fig. 7 is a schematic conceptual view for explaining the detection of a lifted-in-arms state.
Fig. 8 is a flowchart for explaining the processing procedure of false compliance control.
Fig. 9 is a schematic conceptual view for explaining the false compliance control.
Fig. 10 is a schematic conceptual view for explaining put posture control.
Fig. 11 is a perspective view for explaining forms to lift the robot by the user.
Fig. 12 is a block diagram showing the internal structure of the robot.
Fig. 13 is a flowchart showing the processing procedure for detecting lifted state.
Fig. 14 is a side view for explaining the difference of the positions of the center of gravity depending on the state of the robot.
Fig. 15 is a side view for explaining the difference of the positions of the center of gravity depending on the state of the robot.
Fig. 16 is a flowchart showing the processing procedure for detecting lifted state.
Fig. 17 is a flowchart showing the processing procedure for detecting release of lifted-in-arms state.
Fig. 18 is a conceptual view for explaining put posture control processing.
Fig. 19 is a conceptual view for explaining the put posture control processing.
Fig. 20 is a flowchart showing the procedure of put posture control processing.
Fig. 21 is a front view for explaining posture control processing against an unstable lifted posture.
Fig. 22 is a front view for explaining the posture control processing against an unstable lifted posture.
Fig. 23 is a side view for explaining the posture control processing against an unstable lifted posture.
Fig. 24 is a flowchart showing the processing procedure of second lifting-in-arms control.
Fig. 25 is a schematic diagram for explaining conventional lifted-in-arms states of a robot.

Best Mode for Carrying Out the Invention

An embodiment of the present invention will be described in detail with reference to the accompanying drawings.

(1) First Embodiment

(1-1) Overall Structure of Robot 1

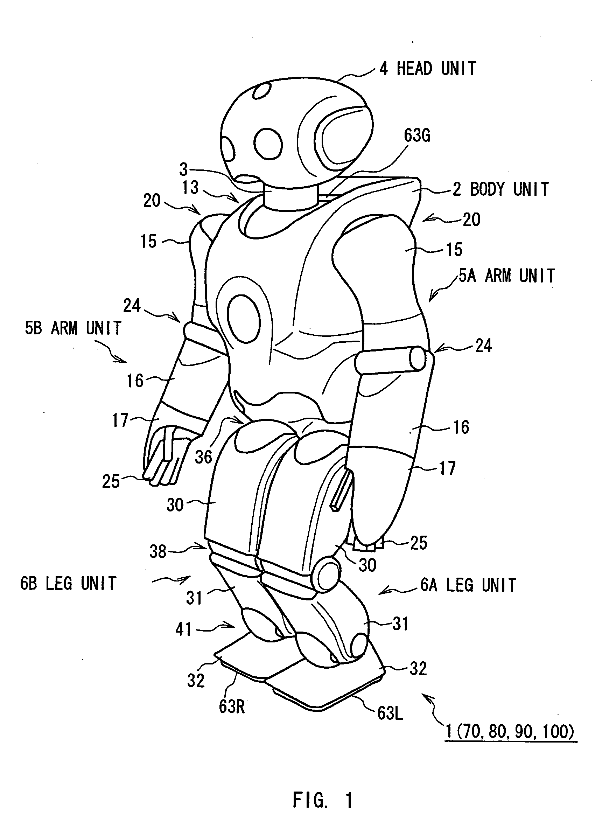

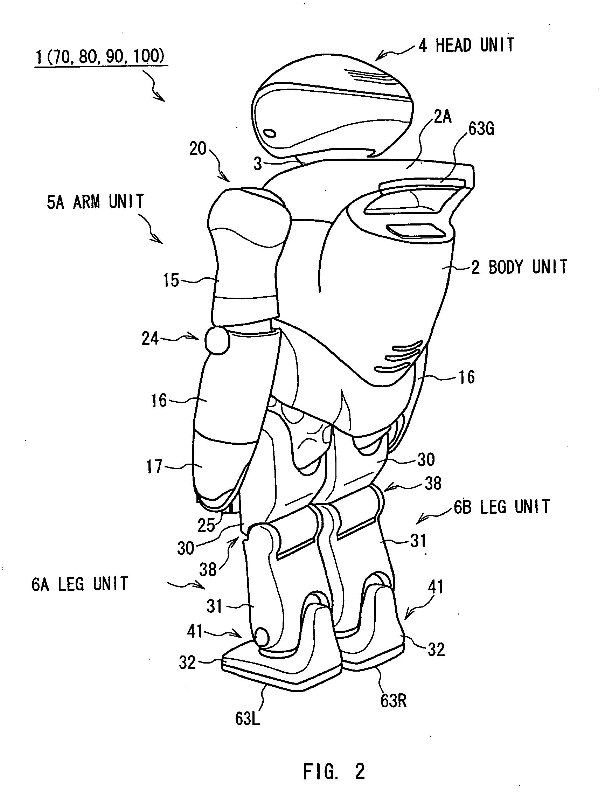

Referring to Figs. 1 and 2, reference numeral 1 denotes a robot according to this embodiment as a whole. The robot is formed by that a head unit 4 is connected to the upper part of a body unit 2 via a neck part 3, and also arm units 5A and 5B are connected to the upper both sides of the above body unit 2 respectively, and a pair of leg units 6A and 6B are connected to the lower part of the above body unit 2.

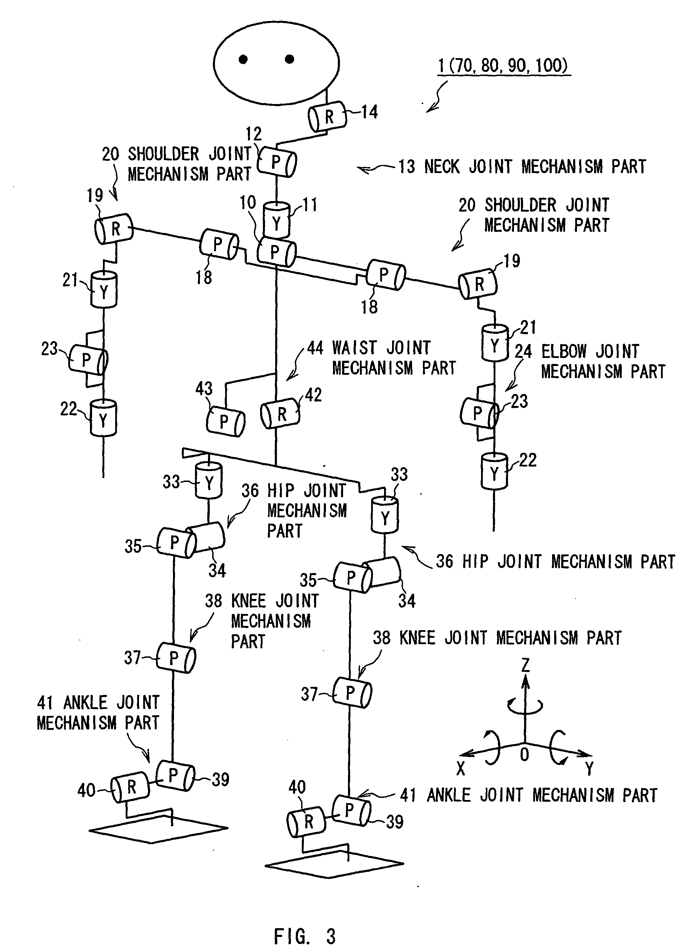

In this case, as shown in Fig. 3, the neck part 3 is held by a neck joint mechanism part 13 having a degree of freedom about a neck joint pitch shaft 10, a neck joint yaw shaft 11 and a neck joint pitch shaft 12. Furthermore, as shown in Fig. 3, the head unit 4 is attached to the top end of this neck part 3 with a degree of freedom about a neck part roll shaft 14. Thereby, in this robot 1, the head unit 4 can be made to turn toward desired right and left and oblique directions.

As obvious in Figs. 1 and 2, each arm unit 5A is composed of three blocks of an upper arm block 15, a forearm block 16 and a hand block 17. And as shown in Fig. 3, the upper end of the upper arm block 15 is connected to the body unit 2 via a shoulder joint mechanism part 20 having a degree of freedom about a shoulder pitch shaft 18 and a shoulder roll shaft 19.

At this time, as shown in Fig. 3, the forearm block 16 is connected to the upper arm block 15 with a degree of freedom about an upper arm yaw shaft 21. As shown in Fig. 3, the hand block 17 is connected to the forearm block 16 with a degree of freedom about a wrist yaw shaft 22. Furthermore, in the forearm block 16, an elbow joint mechanism part 24 having a degree of freedom about an elbow pitch shaft 23 is provided.

Thereby, in the robot 1, these arm units 5A and 5B can be moved with an almost similar degree of freedom to the human's arms as a whole. Thus, various motions with the above arm units 5A and 5B, such as a greeting by raising one hand, and a dance by waving the arm units 5A and 5B can be performed.

Furthermore, five fingers 25 are attached to the tip of the hand block 17 freely in bending and extending respectively. Thereby, the robot can grip and hold something with these fingers.

On the other hand, as obvious in Figs. 1 and 2, each of leg units 6A and 6B is composed of three blocks of a thigh block 30, a shin block 31 and a foot block 32. As shown in Fig. 3, the top end of the thigh block 30 is connected to the body unit 2 via a thigh joint mechanism part 36 having a degree of freedom about a thigh joint yaw shaft 33, a thigh joint roll shaft 34 and a thigh joint pitch shaft 35.

At this time, as shown in Fig. 3, the thigh block 30 and the shin block 31 are connected via a knee joint mechanism part 38 having a degree of freedom about a shin pitch shaft 37, and also as shown in Fig. 3, the shin block 31 and the foot block 32 are connected via an ankle joint mechanism part 41 having a degree of freedom about an ankle pitch shaft 39 and an ankle roll shaft 40.

Thereby, in the robot 1, these leg units 6A and 6B can be moved with an almost similar degree of freedom to the human's legs. Thus, various motions with the leg units 6A and 6B, such as walking and kicking a ball can be performed.

Furthermore, a grip handle 2A is provided in the upper part of the back side of the body unit 2 as surrounding the neck part 3. Thus, the user can lift the entire robot 1 by using this grip handle 2A as a handhold.

Note that, in the case of this robot 1, as shown in Fig. 3, each thigh joint mechanism part 36 is supported by a hip joint mechanism part 44 having a degree of freedom about a trunk roll shaft 42 and a trunk pitch shaft 43. Thereby, also the body unit 2 can be freely inclined in back and forth, and right and left directions.

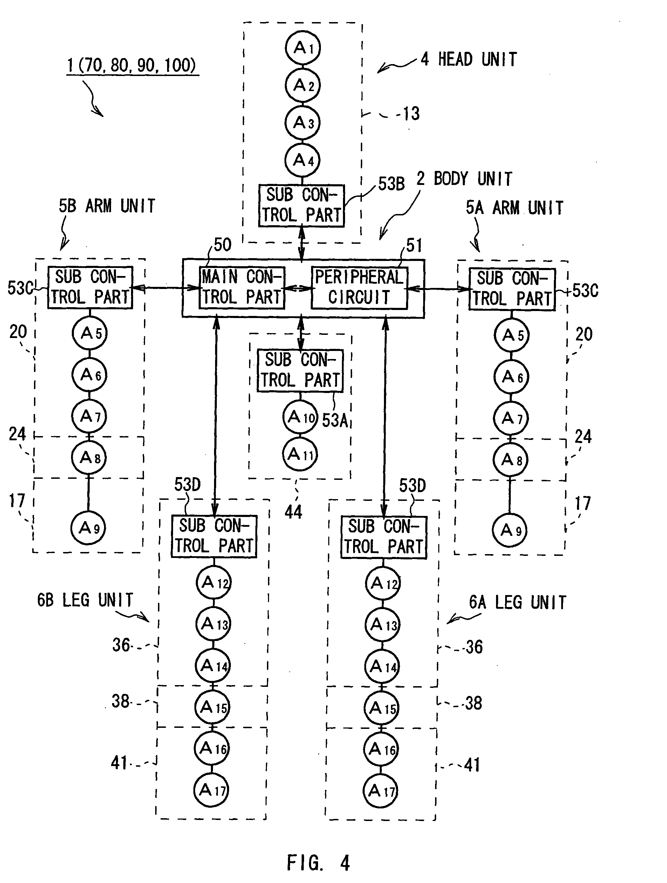

Here, in the robot 1, as a power source to move the head unit 4, each of the arm units 5A and 5B, each of the leg units 6A and 6B and the body unit 2 as described above, as shown in Fig. 4, in the parts having each degree of freedom including each joint mechanism part such as the neck joint mechanism part 13 and the shoulder joint mechanism part 20, actuators $A_1$ - $A_{17}$ respectively for the degree of freedom are disposed.

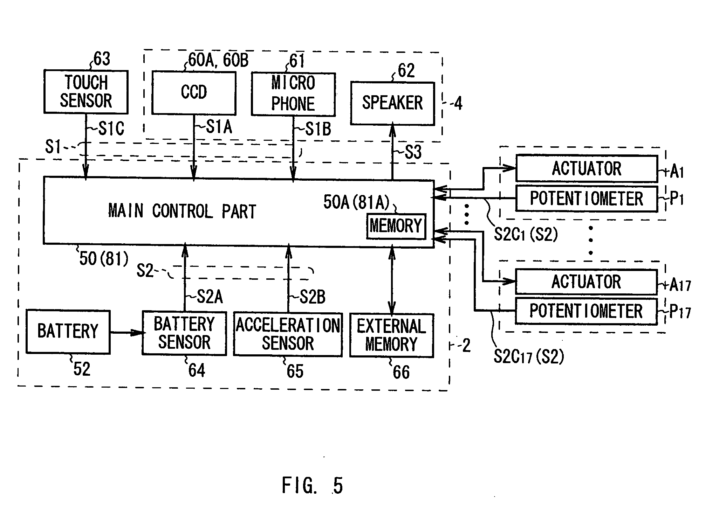

In the body unit 2, a main control part 50 for integrating the operation control of the above whole robot 1, a peripheral circuit 51 such as a power supply circuit and a communication circuit, a battery 52 (Fig. 5), etc. are contained. And in each configuration unit (the body unit 2, the head unit 4, each of the arm units 5A and 5B, and each of the leg units 6A and 6B), sub control parts 53A - 53D respectively electrically connected to the main control part 50 are contained.

Furthermore, in the head unit 4, as shown in Fig. 5, various external sensors such as a pair of charge coupled device (CCD) cameras 60A, 60B that functions as "eyes" of this robot 1, and a microphone 61 that functions as "ear", and a speaker 62 that functions as "mouse" or the like are disposed at predetermined positions respectively.

Touch sensors 63 as external sensors are disposed at each predetermined part such as on the rear surface of the foot block 32 in each of the leg units 6A and 6B, and the grip part of the grip handle 2A. Note that, hereinafter, the touch sensor 63 provided on the rear surface of the foot block 32 in each of the leg units 6A and 6B is referred to as sole force sensors 63L, 63R, and the touch sensor 63 being a tactile switch provided on the grip part of the grip handle 2A is referred to as a grip switch 63G.

In the body unit 2, various internal sensors such as a battery sensor 64 and an acceleration sensor 65 are disposed. In each configuration unit, potentiometers $P_1$- $P_{17}$ serving as internal sensors for detecting the rotational angle of the output shaft of the corresponding actuator $A_1$- $A_{17}$ are provided, by making them correspond to each actuator $A_1$ - $A_{17}$ respectively.

Each of the CCD cameras 60A, 60B picks up the surrounding states, and transmits thus obtained picture signal S1A to the main control part 50 via a sub control part 53B (not shown in Fig. 5). On the other hand, the microphone 61 collects various external sounds, and transmits thus obtained audio signal S1B to the main control part 50 via the sub control part 53B. Each of the touch sensors 63 detects a physical motion from the user and a physical touch to the external thing, and transmits the detection result to the main control part 50 via the corresponding sub control part 53A - 53D (not shown in Fig. 5) as a pressure detection signal S1C.

The battery sensor 64 detects the residual quantity of energy of the battery 52 in a predetermined cycle, and transmits the detection result to the main control part 50 as a residual quantity of battery signal S2A. On the other hand, the acceleration sensor 65 detects the acceleration of three axes (x-axis, y-axis and z-axis) in a predetermined cycle, and transmits the detection result to the main control part 50 as an acceleration detection signal S2B. And each of the potentiometers $P_1$ - $P_{17}$ detects the rotational angle of the output shaft of the corresponding actuator $A_1$ - $A_{17}$, and transmits the detection result to the main control part 50 via the corresponding sub control part 53A - 53D as angle detection signal $S2C_1$ - $S2C_{17}$ in a predetermined cycle.

The main control part 50 determines the external and internal states of the robot 1, the presence/absence of a physical motion from the user, or the like, based on the picture signal S1A respectively supplied from various external sensors such as the CCD cameras 60A, 60B, the microphone 61 and each of the touch sensors 63 or the like, an external sensor signal S1 such as the audio signal S1B and the pressure detection signal S1C, and an internal sensor signal S2 such as the residual quantity of battery signal S2A, the acceleration detection signal S2B and each of the angle detection signals $S2C_1$ - $S2C_{17}$ supplied from various internal sensors such as the battery sensor 64, the acceleration sensor 65 and each of the potentiometers $P_1$ - $P_{17}$ respectively.

Then, the main control part 50 determines the following motions of the robot 1 based on this determination result, a control program that has been previously stored in an internal memory 50A, various control parameters stored in an external memory 66 loaded at that time, or the like, and transmits a control command based on the above determination result to the corresponding sub control part 53A - 53D (Fig. 4).

As a result, based on this control command, the corresponding actuator $A_1$ - $A_{17}$ is driven under the control of that sub control part 53A - 53D. Thus, various motions such as swinging the head unit 4 up and down and right and left, raising the arm units 5A, 5B, and walking are appeared by the robot 1.

In this manner, this robot 1 can autonomously move based on the external and the internal states or the like. (1-2) Lifting-In-Arms Control Function Mounted on Robot 1

Next, a lifting-in-arms control function mounted on this robot 1 will be described.

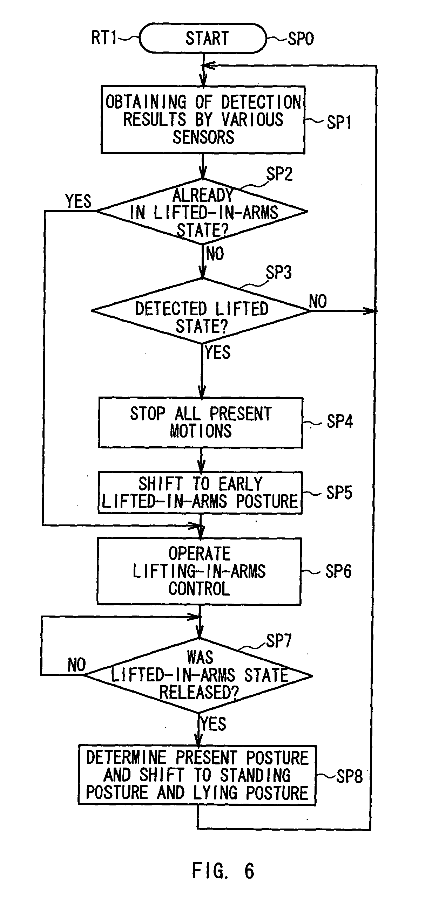

On this robot 1, a function to provide the optimum lifting-in-arms state that is a state close to the reaction as lifting a child in his/her arms to the user (hereinafter, this is referred to as a lifting-in-arms control function) is mounted. This lifting-in-arms control function is displayed by the robot 1 by that the main control part 50 executes predetermined control processing according to a lifting-in-arms control function processing procedure RT1 shown in Fig. 6, based on the control program stored in the internal memory 50A.

That is, if the main switch of the robot 1 is turned on, the main control part 50 starts this lifting-in-arms control function processing procedure RT1 in step SP0. In the following step SP1, the main control part 50 obtains the external sensor signal S1 from various external sensors and the internal sensor signal S2 from various internal sensors.

Then, the main control part 50 proceeds to step SP2 to determine whether or not the robot 1 is, at present, in the state lifted in the user s arms as shown in Fig. 25(A) (hereinafter, this is referred to as a lifted-in-arms state), based on these external sensor signal **S1** and internal sensor signal **S2**.

Here, obtaining an affirmative result in this step SP2 means that the robot 1 is already in the lifted-in-arms state lifted in the user s arms (or an initial lifted-in-arms posture described later). Therefore, at this time, the main control part 50 proceeds to step SP6.

On the contrary, obtaining a negative result in this step SP2 means that the robot 1 is not still in the lifted-in-arms state lifted in the user s arms. Thus, at this time, the main control part 50 proceeds to step SP3 to determine whether or not the robot 1 is, at present, in the state lifted by the user (hereinafter, this is referred to as a lifted state) as a prestage to lift up.

Then, if a negative result is obtained in this step SP3, the main control part 50 returns to step SP1. Thereafter, the main control part 50 repeats the loop of steps SP1 to SP3 - step SP1 until an affirmative result is obtained in step SP2 or step SP3.

Furthermore, if an affirmative result is soon obtained in step SP3 by that the robot 1 was lifted by the user, the main control part 50 proceeds to step SP4 to control the corresponding actuator $A_1$ - $A_{17}$, and stop all of the present motions of the robot 1.

Then, the main control part 50 proceeds to step SP5 to control the corresponding actuator $A_1$ - $A_{17}$ to shift the posture of the robot 1 to a predetermined lifted-in-arms posture previously set as a default (hereinafter, this is referred to as the initial lifted-in-arms posture). And then, the main control part 50 proceeds to step SP6.

If proceeding to this step SP6, the main control part 50 executes various joint control operations such as keeping the optimum lifted-in-arms state from the present lifted-in-arms state (hereinafter, this is referred to as lifting-in-arms control). Then, the main control part 50 proceeds to step SP7 to await the release of the lifted-in-arms state (that is, the robot 1 is got down on the floor).

Then, if an affirmative result is soon obtained in this step SP7, by soon detecting that the robot 1 was got down on the floor based on the external sensor signal **S1** and the internal sensor signal S2, the main control part 50 proceeds to step **SP8** to determine the present posture of the robot 1, based on the angle detection signal **S2C1** - **S2C17** respectively supplied from each potentiometer $P_1$ - $P_{17}$, and then control the corresponding actuator $A_1$ - $A_{17}$ as the occasion demands, and shift the posture of the robot 1 to a predetermined sitting posture and lying posture.

Furthermore, the main control part 50 then returns to step SP1, and then, similarly repeats steps **SP1** to **SP8**. If the main switch of the robot 1 is soon turned off, the main control part 50 stops this lifting-in-arms control function processing procedure RT1.

(1-2-1) Lifted State Detecting Processing

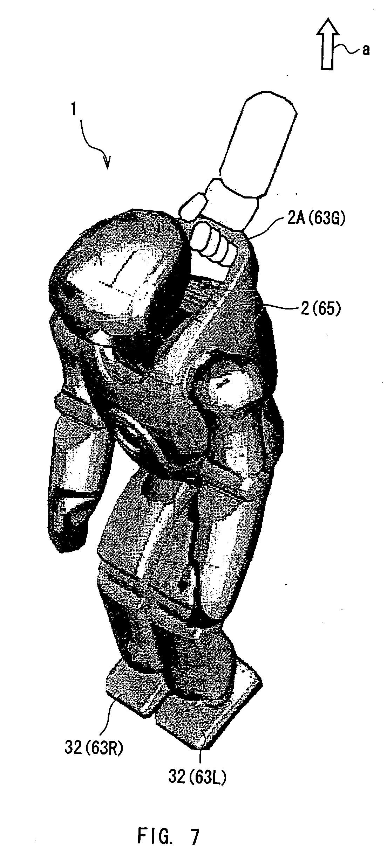

Here, in steps SP1 - SP3 in the lifting-in-arms control function processing procedure RT1 shown in Fig. 6, as shown in Fig. 7, the main control part 50 always monitors whether or not the present state of the robot 1 satisfies the following first to third conditions, to detect that the robot 1 is, at present, in the lifted state lifted by gripping the grip handle 2A.

That is, the first condition is that the grip switch 63G is in the state detecting pressure (an on state), and that the grip handle 2A is gripped is prerequisitely conditioned to clearly grasp that the robot 1 is being lifted. The second condition is that both of the sole force sensors 63L, 63R are in an off state (that is, the sensor values are almost zero), and also that both of the foot blocks 32 of the robot 1 are not in a landing state is conditioned.

The third condition is that the robot 1 was accelerated in the opposite direction to gravity (the direction of arrow "a" in Fig. 7) was detected by the detection result by the acceleration sensor 65, and also that the robot 1 was lifted in the vertical direction inverse to the gravity direction is conditioned. Because there is a case where the aforementioned first and second conditions are satisfied even if the robot 1 is in the state lying on the floor or the like, this third condition is needed to complete this.

In this manner, only when all of these first to third conditions are satisfied, the main control part 50 determines that the robot 1 is, at present, in the lifted state, and promptly shifts to the following processing operation (that is, step SP4).

(1-2-2) Motion When Lifted State Was Detected

In step SP4 in the lifting-in-arms control function processing procedure RT1 shown in Fig. 6, when the main control part 50 detected that the robot 1 is, at present, in the lifted state, the main control part 50 stops the driving of various actuators $A_1$ - $A_{17}$ (Fig. 4) so as to promptly stop all of the motions.

Thereby, the main control part 50 prevents to flap the arms and legs when the robot 1 is in the state being lifted by the user. Then, the main control part 50 controls the corresponding actuator $A_1$ - $A_{17}$, and shifts the posture of the robot 1 to the initial lifted-in-arms posture (step SP5).

(1-2-3) Joint Control in Stable Lifted-In-Arms State

In step SP5 of the lifting-in-arms control function processing procedure RT1 shown in Fig. 6, the main control part 50 executes lifting-in-arms control operation so as to be able to always keep the optimum lifted-in-arms state for the user from the initial lifted-in-arms posture as the default.

As this lifting-in-arms control operation, it can be generally considered that in the lifted-in-arms state, making the robot flexible and performing such control as according with the way of holding by the user makes easier to hold for the user. Therefore, a method described below in that three lifting-in-arms control methods are combined is applied.

In this connection, it is ideal that force sensors are previously mounted on all of the surfaces of the parts expected to contact to the user's arms, and lifting-in-arms control operation is realized by performing impedance control or the like. However, it is not realistic from such point of view that the structure of the entire robot 1 becomes complicated. Therefore, in the above three lifting-in-arms control methods, a technique that does not use such plural force sensors is adopted.

(1-2-3-1) Lifting-In-Arms Control Method by Servo Gain Control

In the robot 1, the posture of the robot 1 can accord with the user's arms, by controlling the servo gain to be comparatively small as to needed one in lifting in the user s arms in each of the actuators $A_1$ - $A_{17}$ (Fig. 4).

However, if a certain degree of rigidity must be kept in each joint part of the robot 1, the robot 1 becomes in an unstable state in the user's arms, and also it lacks to easily hold. Therefore, considering the output torque of each actuator $A_1$ - $A_{17}$ and viscosity, the output torque of each actuator $A_1$ - $A_{17}$ is controlled so as to keep constant rigidity while somewhat making joint of the robot 1 flexible.

(1-2-3-2) Lifting-In-Arms Control Method by Joint Gain Control According to Gravity

On the robot 1, it can be made that the user easily puts it down on the floor or the like from the lifting-in-arms state, by changing the adjust level of each joint gain matching with the direction of the body to the gravity direction.

That is, when the robot 1 is in a sideways state by holding with the user's both arms, the gain of each of the corresponding actuators $A_1$- $A_{17}$ is controlled so that each joint of the lower half of the body of the robot 1 becomes flexible. On the other hand, when the robot 1 is in the vertical direction by lifting with the user's one hand, the gain of each of the corresponding actuators $A_1$ - $A_{17}$ is controlled so that each joint of the lower half of the body of the robot 1 becomes rigid.

By controlling the gain of each actuator $A_1$ - $A_{17}$ as the above, such effects that when the user holds the robot 1 in both arms (the lower half of the body is sideways), much importance to easily holding in the user s arms can be attached, and when the user is lifting the robot 1 with one hand (the lower half of the body looks down), the robot 1 becomes easily put by making the posture of the robot 1 stable when in putting down on the ground, can be obtained.

Furthermore, by controlling the gain of each actuator $A_1$ - $A_{17}$ as the above, in the case where the user changed the way of holding the robot 1 from the state lifting the robot 1 with the both hands into lifting with one hand by holding only the grip handle 2A, when the lower half of the body of the robot 1 looked down, since each joint of the above lower half of the body becomes rigid, also such effect that the posture of the robot 1 gradually returns to a standing state, and putting down the robot 1 on the ground again becomes very easy, can be obtained.

(1-2-3-3) Lifting-In-Arms Control Method by False Compliance Control

In the robot 1, by applying a certain limitation to the motion of the whole body so as not to be able to move only within a certain posture, also the posture of the robot 1 in the lifted-in-arms state can be made to the design target.

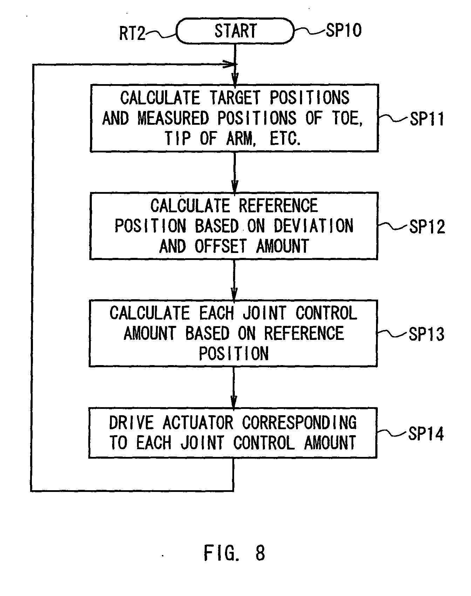

By executing a false compliance control processing procedure RT2 shown in Fig. 8 to apply such limitation to the robot 1, even if deviation occurred at the toe and the tip of the arm of the robot 1 by the way of holding by the user, each link of the robot can follow the above deviation.

Practically, if proceeding to step SP6 in the first lifting-in-arms control processing procedure RT1, the main control part 50 (Figs. 4 and 5) starts the false compliance control processing procedure of Fig. 8 in step SP10. In the following step SP11, the main control part 50 calculates the target positions and the measured positions of the toe, the tip of the arm of the robot 1, etc., by respectively using the target angle of each joint of the robot 1, and a measured angle by each of the corresponding potentiometers $P_1$- $P_{17}$ or the like, and applying direct kinematics.

In the following step SP12, the main control part 50 obtains the deviation of the measured position to the target position, and then calculates a reference position by adding an offset amount in that a predetermined rate was multiplied by the above deviation to the above target position.

Then, the main control part 50 proceeds to step SP13 to calculate each joint control amount by using thus obtained reference position by means of inverse kinematics. Then, the main control part 50 proceeds to step SP14 to apply the obtained joint control amount to the corresponding actuator $A_1$ - $A_{17}$ (Fig. 5), and then returns to step SP11 to repeat processing similar to the above.

Thereby, false compliance control according with the way of holding by the user can be realized. As a result, it can make the user feel as if the robot relaxed and accords with the way of holding by the user.

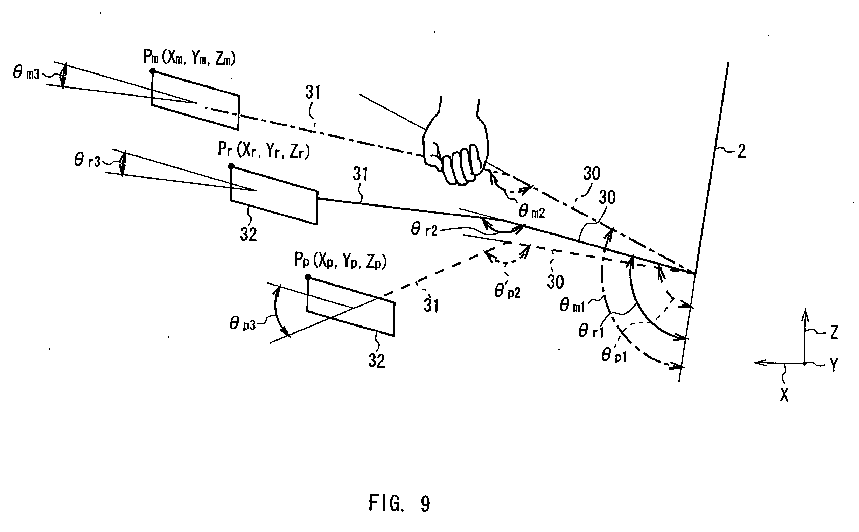

As a concrete example, the case where in each of the leg units 6A and 6B, the robot 1 raises the toe as if stretching the legs forward from the state sitting in a chair will be described. In an XYZ coordinate system shown in Fig. 9, it is assumed that the thigh joint pitch shaft 35 of the thigh joint mechanism part 36 in each of the leg units 6A and 6B, the shin pitch shaft 37 of the knee joint mechanism part 38 and the ankle pitch shaft 39 of the ankle joint mechanism part 41 are represented as Y shafts, on an XZ plane.

First, the position $P_p(X_p, Y_p, Z_p)$ of the foot block 32 of each of the leg units 6A and 6B in the initial lifted-in-arms posture (hereinafter, this is referred to as a target toe position) is calculated by direct kinematics, by using an angle $\theta_{p1}$ centering the thigh joint pitch shaft 35 of the thigh joint mechanism part 36 (hereinafter, this is a target angle), a target angle $\theta_{p2}$ centering the shin pitch shaft 37 of the knee joint mechanism part 38, and a target angle $\theta_{p3}$ centering the ankle pitch shaft 39 of the ankle joint mechanism part 41.

Next, even in this initial lifted-in-arms posture, if external force is applied when the robot was practically lifted in the user s arms, the position $P_m(X_m, Y_m, Z_m)$ of the foot block 32 in that posture (hereinafter, this is referred to as a measured toe position) is calculated by direct kinematics, by using an angle $\theta_{m1}$ centering the thigh joint pitch shaft 35 of the thigh joint mechanism part 36 (hereinafter, this is a measured angle), a measured angle $\theta_{m2}$ centering the shin pitch shaft 37 of the knee joint mechanism part 38, and a measured angle $\theta_{m3}$ centering the ankle pitch shaft 39 of the ankle joint mechanism part 41.

At this time, the position $P_r(X_r, Y_r, Z_r)$ of the foot block 32 when a certain limitation was applied to each of the leg units 6A and 6B ao as not be able to move only within a certain posture (hereinafter, this is referred to as a reference toe position) is obtained, as the sum of offset amounts (= $P_d \times$ RATE) by that the rate RATE($r_x$, $r_y$, $r_z$) of the respective components is multiplied by each component of the target toe position Pp, and each component of the deviation $P_d$ (= $P_m$ - Pp) of the measured toe position $P_m$ to the above target toe position Pp.

This rate RATE($r_x$, $r_y$, $r_z$) is a parameter to determine the torques of the thigh joint mechanism part 36, the knee joint mechanism part 38 and the ankle joint mechanism part 41 in each rotational direction, and is represented by the range of $0 \leqq r_x \leqq 1$, $0 \leqq r_y \leqq 1$ and $0 \leqq r_z \leqq 1$. As $r_x$, $r_y$ and $r_z$ are closer to 1, the torque is smaller and the joint parts are more flexible. On the other hand, as they are closer to 0, the torque is bigger and the joint parts are more rigid. For example, if assuming the rate RATE($r_x$, $r_y$, $r_z$) = (0.5, 0.9, 0.5), although the joint parts can be easily moved in the y-direction, they somewhat rigidly move in the x-direction and the z-direction.

In this reference toe position $P_r(X_r, Y_r, Z_r)$, it becomes an angle $\theta_{r1}$ centering the thigh joint pitch shaft 35 of the thigh joint mechanism part 36 (hereinafter, this is a reference object angle), a reference object angle $\theta_{r2}$ centering the shin pitch shaft 37 of the knee joint mechanism part 38, and a reference object angle $\theta_{r3}$ centering the ankle pitch shaft 39 of the ankle joint mechanism part 41.

In this manner, for example, if the robot 1 is assumed to have female characteristics, by setting the rate to RATE($r_x$, $r_y$, $r_z$) = (1, 0, 1), the motion in the y-direction is limited, and it becomes the control to move only in the direction that the robot 1 does not open the legs (it looks to be elegant).

In this connection, by previously setting the components $r_x$, $r_y$, $r_z$ of the rate RATE to the functions according to the output of the acceleration sensor 65 respectively, the degree of false compliance control can be controlled depending on the posture of the robot 1. For example, by previously setting to the functions of a logarithm, such control that the flexibility of the body suddenly increases due to a rapid change in the gravity direction is possible.

Furthermore, by applying false compliance control similar to the above not only in the rotational direction centering the pitch shaft but also in the rotational direction centering the roll shaft and the yaw shaft, further fine control can be performed. Additionally, by previously setting a target position to a position similar to the put posture, an advantage that the robot is easily put down on the ground again similarly to the aforementioned motion in the lifting-in-arms detection can be obtained.

(1-2-3-4) Putting Posture Control Processing

In step SP7 of the first lifting-in-arms control processing procedure RT1, the main control part 50 executes put posture control processing when the robot 1 is put down on the floor, as a determination factor whether or not the lifted-in-arms state was released (whether or not the robot 1 was put down on the floor), so that it can be prevented that the posture becomes unstable when it contacts with the floor.

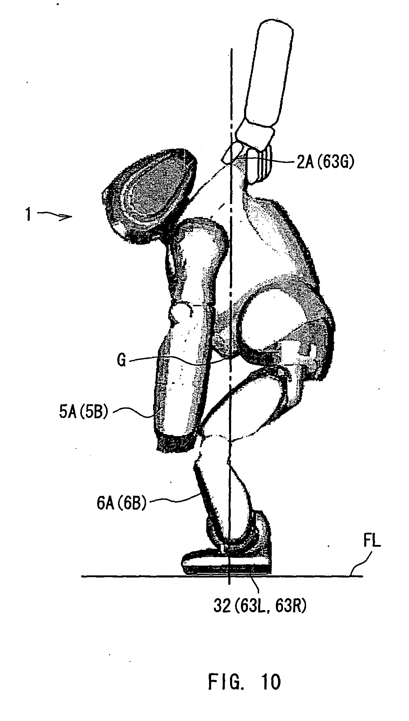

As shown in Fig. 10, when in contacting with the floor FL, this put posture control processing is the control to shift the robot 1 to a standing posture while shifting the posture of the robot 1 so that the grip handle 2A, the center of gravity G of the whole robot 1, and the foot block 32 become on the straight, at the time when it was determined that load was applied on the sole force sensors 63L, 63R.

Here, in the aforementioned false compliance control, the target position is always set to the put posture, and if the lower half of the body of the robot 1 further turned to the gravity acceleration direction, the parameters of the compliance control are increased/decreased to make closer to the direction in that the user will put the robot 1. Thereby, a posture further easy to put for the user can be realized.

(1-2-4) Return Control from Lifted-In-Arms Posture

In a step SP8 in the first lifting-in-arms control processing procedure RT1, the main control part 50 determines the present posture, and returns the posture so as to shift to the former standing posture and a lying posture.

That is, to return the robot 1 from the lifted-in-arms posture to the normal standing posture, for instance, if the robot 1 is in the put posture and also load is applying on the sole force sensors 63L, 63R, it is determined to be in a put state at present. Thereby, the robot 1 can be safely shifted to the standing state.

On the other hand, based on the detection result by the acceleration sensor 65, in the case where the robot 1 is in a vertical state to the gravity direction, it can be determined that the robot 1 is sideways at present. In addition, if also adding that the grip switch 2A is in an off state to the condition, it can be determined that the robot 1 is, at present, in the state put on the floor, and returning the robot 1 to the lying posture is the best.

Note that, when in performing the aforementioned return control, by making that a trigger when the robot 1 returns the posture is inputted by the user by using the touch sensor 63 disposed at the shoulder part of the robot 1 and another input device, a malfunction such that the return operation appears when the user is lifting the robot 1 in his/her arms can be prevented.

(1-3) Operation and Effects by First Embodiment

According to the above structure, this robot 1 recognizes being in the lifted-in-arms (or lifted) state by the user when that the grip handle 2A of the body unit 2 was gripped was detected by the grip switch 63G, and also that both of the foot blocks 32 of the robot 1 are not in the landing state was detected by the sole force sensors 63L, 63R, and further that the robot 1 was lifted in the vertical direction being the antigravity direction was detected by the acceleration sensor 65. Accordingly, it can be surely recognized that the robot 1 was lifted in the user s arms (or lifted) even in any posture such as lying on the floor or the like.

Then, when the robot 1 recognized the lifted-in-arms state, the robot 1 immediately stops driving the various actuators $A_1$ - $A_{17}$ and stops all the motions, and then shifts to the initial lifted-in-arms state as it is. Therefore, in this robot 1, it can be prevented that the robot 1 flaps the arms and legs in the lifted-in-arms state. As a result, the user's safety can be maintained.

Furthermore, the robot 1 executes the lifting-in-arms control operation by various joint controls such as to keep the optimum lifting-in-arms state for the user from this initial lifted-in-arms state. Therefore, this robot 1 can accord with the way of holding by the user by making the body flexible in lifting-in-arms.

At that time, the robot 1 controls the servo gain of each actuator $A_1$ - $A_{17}$ necessary for lifting-in-arms by the user to be comparatively small, so that its own posture can accord with the user's arms.

When the robot 1 is in the sideways state by held in the user's arms, the robot 1 controls each joint gain so that each joint of the lower half of the body becomes flexible, on the other hand, when it is in a vertical state, the robot 1 controls each joint gain so that each joint of the lower half of the body becomes rigid. Therefore, when the user holds the robot 1 in his/her arms (the lower half of the body is sideways), the degree of easy to hold for the user is made a point, on the other hand, when the user lifts the robot by one hand (the lower half of the body is turning down), it can make the user feel a reaction close to lifting a child in his/her arms, such that when the user puts down the robot on the ground again, the posture of the robot is stable and easy to put.

Furthermore, by executing the false compliance control, even if a deviation occurred at the toe and the tip of the arm of the robot 1 by the way of holding by the user, each link of the robot 1 follows the above deviation. Therefore, a constant limitation can be added so that the motion of the whole body can be moved only within a certain posture. As a result, also the looks of the posture in the lifted-in-arms state by the user can be improved.

Then, while executing the above lifting-in-arms control operation, when the robot 1 recognized that the lifted-in-arms state was released, if the robot 1 is in a lifted-down state, the robot 1 returns to a safe standing posture, or if the robot 1 is sideways, in order to return to a lying posture, the robot 1 determines the present posture and returns the posture so as to shift to the former standing posture and a lying posture. Therefore, safety can be maintained and naturality of looks can be appeared after the lifted-in-arms state.

According to the above configuration, when the robot 1 recognized that it was made into a lifted-in-arms state by the user based on the detection results by various sensors, the robot 1 stops all the present motions and shifts to the initial lifted-in-arms state, and then executes a lifting-in-arms control operation by various joint control such as keeping the optimum lifted-in-arms state for the user. On the other hand, then, when the robot 1 recognized that the lifted-in-arms state was released, the robot 1 executes a series of control operation such that the robot 1 shifts to a standing posture and a lying posture according to the present posture. Thereby, the optimum lifting-in-arms state being a state close to the reaction as if holding a child in his/her arms can be provided to the user. Thus, a robot that can remarkably improve the entertainment ability can be realized.

(2) Second Embodiment

(2-1) Configuration of Robot According to This Embodiment

Referring to Figs. 1 - 4, reference numeral 70 denotes a robot according to a second embodiment as a whole. The robot is formed similarly to the robot 1 according to the first embodiment, except the point that even if the robot was lifted by holding a part other than the grip handle 2A, this can be detected.

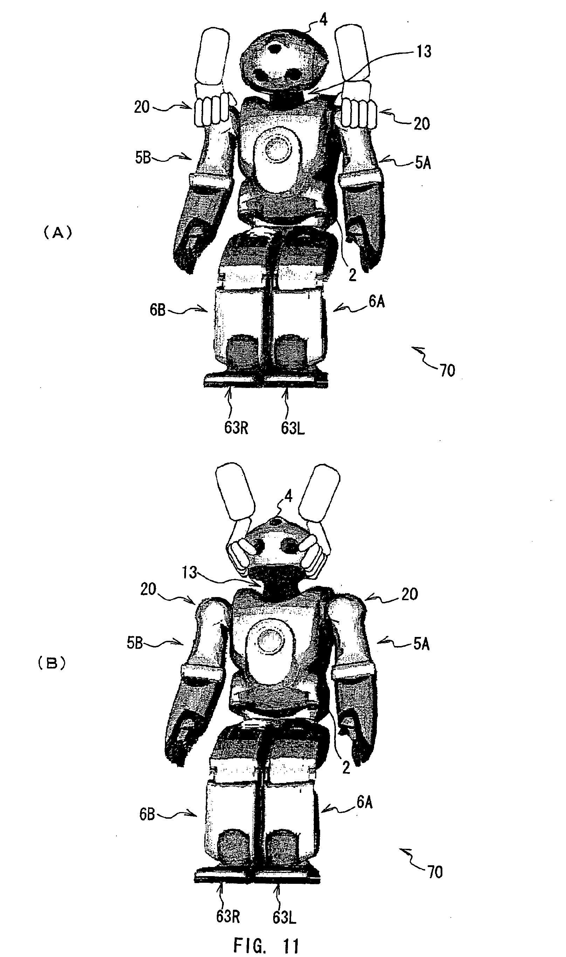

That is, when in lifting the robot 70, the user does not always hold the grip handle 2A. For instance, as shown in Fig. 11(A), the user can lift the robot 70 by holding its both shoulders, and as shown in Fig. 11(B), by holding the head unit 4.

In this case, in the case where the robot 70 was lifted by holding a part other than the grip handle 2A such as the case of being lifted by holding the both shoulders as shown in Fig. 11(A), and the case of being lifted by holding the head unit 4 as shown in Fig. 11(B), force in the inverse direction to gravity to hold the tare of the above robot 1 operates on the corresponding joint mechanism part such as the shoulder joint mechanism part 20 and the neck joint mechanism part 13 that connect that held part and the body unit 2.

Therefore, when force at a predetermined level or more in the inverse direction to gravity operates on either of the joint mechanism parts as well as acceleration occurs in the inverse direction to gravity in the robot 70, and any of the sole force sensors 63L, 63R of each leg unit 6A, 6B do not detect pressure and it is in an off state, it can be determined that the robot 70 is lifted up by that the part connected to the body unit 2 via the above joint mechanism part is held.

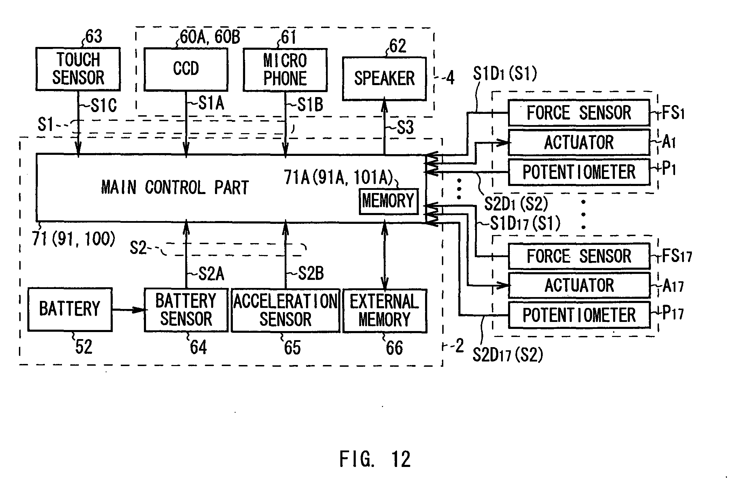

Then, in this robot 70, as shown in Fig. 12 in which the same reference numerals are added to the corresponding parts in Fig. 5, force sensors $FS_1$ - $FS_{17}$ are provided by respectively corresponding to each actuator $A_1$ - $A_{17}$, and if on the output shaft of either actuator $A_1$ - $A_{17}$, force in the vertical direction to the above output shaft operated, this can be detected by the corresponding force sensor $FS_1$ - $FS_{17}$. Furthermore, when each force sensor $FS_1$ - $FS_{17}$ detected the above force, the force sensor $FS_1$ - $FS_{17}$ transmits this to a main control part 71 for integrating the operation control of this entire robot 70, as a force detection signal $SID_1$ - $S1D_{17}$.

Then, if that the robot 70 was lifted by holding a part other than the grip handle 2A is detected based on the main control part 71, these force detection signals $SID_1$ - $SID_{17}$ from the force sensors $FS_1$ - $FS_{17}$ and acceleration detection signal S2B from the acceleration sensor 65 or the like, the main control part 71 executes similar control processing to the case of being lifted by holding the grip handle 2A. On the other hand, in the case where the above held part is connected to the body unit 2 via a joint mechanism part structurally weak, the main control part 71 gives the user a warning to stop this.

In this manner, in this robot 70, even if the robot 70 was lifted by holding a part other than the grip handle 2A, the robot 70 operates similarly to the case of being lifted by holding the grip handle 2A. Thereby, the occurrence of injury to the user caused by that the robot 70 moved the arms and legs in the lifted state and in the lifted-in-arms state can be effectively prevented, and safety of the user can be further maintained.

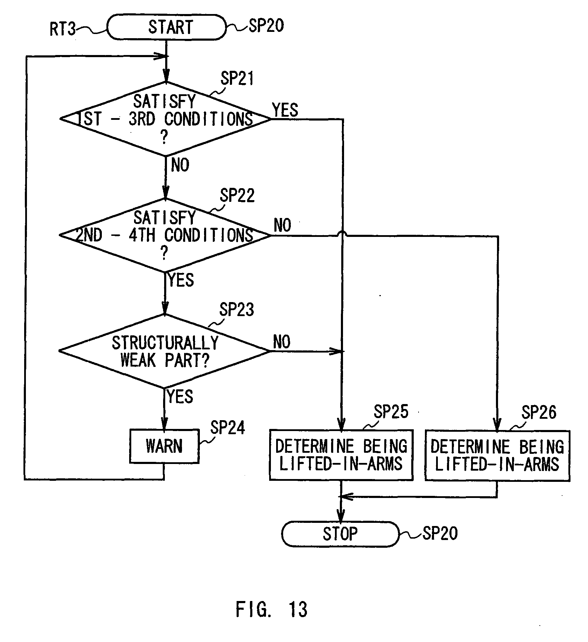

Here, detection processing in such lifted state is performed according to a lifted state detection processing procedure RT3 shown in Fig. 13, under the control of the main control part 71, based on a control program stored in its internal memory 71A.

Practically, if the main control part 71 proceeds to step SP3 of the first lifting-in-arms control processing procedure RT1 (Fig. 6), the main control part 71 starts this lifted state detection processing procedure RT3 in step SP20, in the following step SP21, the main control part 71 determines whether or not the present state of the robot 70 satisfies all of the first condition that the grip switch 63G is in an on state, described above in the first embodiment as to this step SP3, a second condition that both of the sole force sensors 63L, 63R are in an off state, and a third condition that the acceleration sensor 65 detected acceleration in the inverse direction to gravity, based on the pressure detection signal S1C supplied from the corresponding touch sensor 63 and the acceleration detection signal S2B supplied from the acceleration sensor 65.

Obtaining an affirmative result in this step SP21 means that the robot 1 is in the state being lifted by holding the grip handle 2A (lifting state). Therefore, at this time, the main control part 71 proceeds to step SP25 to determine that the robot 1 is in the lifted stored, and then proceeds to step SP27 to stop this lifted state detection processing procedure RT3. Then, the main control part 71 returns to the first lifting-in-arms control processing procedure RT1 (Fig. 6) and proceeds to its step SP4, and then performs the processing of steps SP4 - SP8 of this first lifting-in-arms control processing procedure RT1 (Fig. 6) as the above.

On the contrary, obtaining a negative result in step SP21 means that the robot 1 is not in the state being lifted by holding the grip handle 2A (lifting state). Therefore, at this time, the main control part 71 proceeds to step SP22 to determine whether or not in addition to the aforementioned second and third conditions, a fourth condition that on the output shaft of either of the actuators $A_1$ - $A_{17}$, force in the vertical direction to the above output shaft operates are all satisfied, based on the pressure detection signal S1C supplied from the corresponding touch sensor 63, the acceleration detection signal S2B supplied from the acceleration sensor 65, and the force detection signals $S1D_1$ - $S1D_{17}$ supplied from each force sensor $FS_1$- $FS_{17}$.

Obtaining an affirmative result in this step SP22 means that the robot 1 is in the state lifted by holding a part other than the grip handle 2A (lifting state). Therefore, at this time, the main control part 71 proceeds to step SP23 to determine whether or not the joint mechanism part connecting the part held at the time and the body unit 2 is a joint mechanism part predetermined as a part structurally weak against a load, such as the neck joint mechanism part 13, based on the force detection signal $S1D_1$ - $S1D_{17}$ supplied from the corresponding force sensor $FS_1$- $FS_{17}$.

If an affirmative result is obtained in this step SP23, the main control part 71 transmits a corresponding audio signal S3 (Fig. 12) to the speaker 62 (Fig. 12) to output voice such as "Please don't hold there." "Let me down.", or drives the corresponding actuator $A_1$ - $A_{17}$ to make the robot 1 appear a predetermined motion, and gives the user a warning. Then, the main control part 71 returns to step SP21.

On the contrary, if a negative result is obtained in step SP23, the main control part 71 proceeds to step SP25. After the main control part 71 determined that the robot 1 was in the lifted state (lifting state), the main control part 71 proceeds to step SP27 to stop this lifting state detection processing procedure RT3. Then, the main control part 71 returns to the first lifting-in-arms control processing procedure RT1 (Fig. 6) and proceeds to its step SP4, and then performs the processing of steps SP4 - SP8 of this first lifting-in-arms control processing procedure RT1 as described above.

Note that, obtaining a negative result in step SP22 means that the robot 1 is not, at present, in the lifted state (lifting state). At this time, the main control part 71 proceeds to step SP26. After the main control part 71 determined that the robot 1 was not in the lifted state, the main control part 71 proceeds to step SP27 to stop this lifting state detection processing procedure RT3. Then, the main control part 71 returns to the first lifting-in-arms control processing procedure RT1 (Fig. 6), and then returns to step SP3 of this first lifting-in-arms control processing procedure RT1.

In this manner, even if the robot 1 was lifted by that a part other than the grip handle 2A was held, the main control part 71 can surely detect this, and can execute necessary control processing.

(2-2) Operation and Effects of This Embodiment

According to the above structure, the robot 70 determines to be in a lifted state when all of the second condition that both of the sole force sensors 63L, 63R are in an off state, the third condition that the acceleration sensor 65 detected acceleration in the inverse direction to gravity, and the fourth condition that on either of the actuators $A_1$ - $A_{17}$, external force in the vertical direction to the above output shaft operates are satisfied, and then stops all of the present motions and shifts to the initial lifted-in-arms posture, and then executes the lifting-in-arms control operation.

Therefore, according to the robot 70, not only in the case where the robot 70 was lifted by holding the grip handle 2A but also in the case where the robot 70 was lifted by holding a part other than the grip handle 2A, the robot 70 can surely detect this. Even in the case where the robot 70 was lifted by holding a part other than the grip handle 2A, the occurrence of injury to the user caused by that the robot 70 moved the arms and legs in the lifted state and the lifted-in-arms state can be effectively prevented, and safety of the user can be further maintained.

On the other hand, by designing so that the lifting-in-arms control operation described above in the first embodiment can be performed also in the lifting state in the case where the user lifted the robot by holding a part other than the grip handle 2A as the above, a feeling close to the feeling of lifting a child in his/her arms can be provided to the user, comparing to the case where the hold-up control operation is not appeared except when the user lifted the robot by holding the rip handle 2A.

According to the above structure, in the case where all of the second condition that both of the sole force sensors 63L, 63R are in an off state, the third condition that the acceleration sensor 65 detected acceleration in the inverse direction to gravity, and the fourth condition that on either of the actuators $A_1$ - $A_{17}$, external force in the vertical direction operates on the above output shaft are satisfied, the robot determines to be lifted, and then stops all of the present motion and shifts to the initial lifted-in-arms posture, and then executes the lifting-in-arms control operation. Thereby, also in the case where the robot was lifted by that a part other than the grip handle 2A was held, the robot can surely detect this. Therefore, also in the lifted state and the lifted-in-arms state in the case where the robot was lifted by that a part other than the rip handle 2A was held, a feeling close to the feeling of lifting a child in his/her arms can be provided to the user while further maintaining the safety of the user. Thus, a robot that can remarkably improve the entertainment ability can be realized.

(3) Third Embodiment

(3-1) Configuration of Robot According to This Embodiment

Referring to Figs. 1 to 4, reference numeral 80 denotes a robot according to a third embodiment as a whole.

The robot 80 is formed similarly to the robot 1 according to the first embodiment (Figs. 1 - 4), except the point that being lifted and the release of the lifted-in-arms state (the robot 80 was put down on the floor) are detected by using servo deviation.

That is, generally, in the robot 1, the joint angle of each joint mechanism part has been respectively predetermined by posture. When in operating, each actuator $A_1$ - $A_{17}$ is respectively controlled so that the joint angle of each joint mechanism part respectively becomes the angle determined as to a posture targeted at that time (hereinafter, this is referred to as a target posture). Thereby, that target posture can be taken as the whole robot 1.

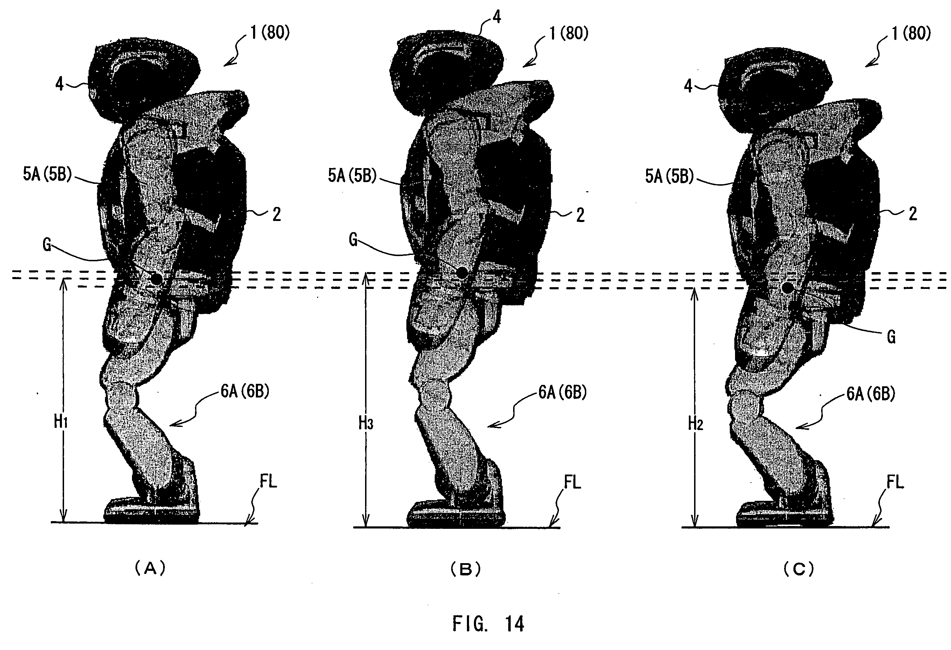

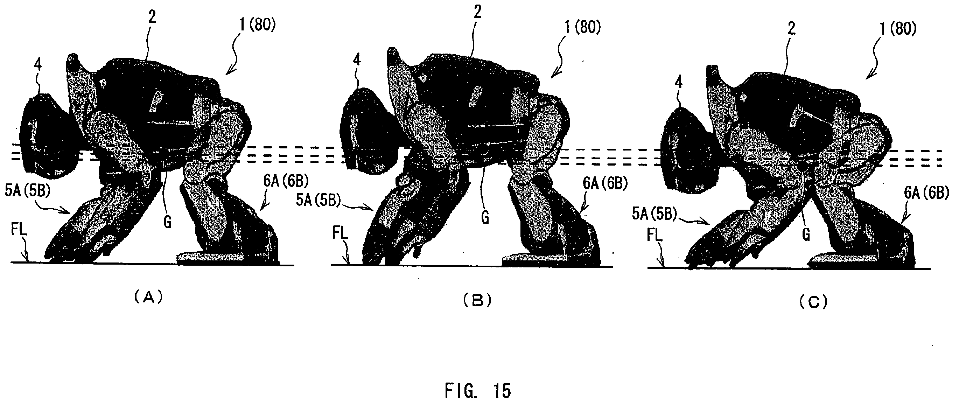

However, when the robot 1 is in a landing state that a part of the body contacts with the floor and the tare is supported by that part, on each joint mechanism part supporting the tare, the tare of the body part upper than the above joint mechanism part is applied to each joint mechanism part supporting the tare as a load. Therefore, the corresponding actuator $A_1$ - $A_{17}$ in that joint mechanism part cannot keep the rotational angle of the output shaft to the angle predetermined as to the target posture at that time (for example, Figs. 14(A) and 15(A)) (hereinafter, this is referred to as a target angle), by the effect of this load; the servo deviation that the rotational angle of the output shaft of the above actuator $A_1$ - $A_{17}$ becomes smaller than the target angle occurs.

As a result, as shown in Figs. 14(C) and 15(C), at this time, a phenomenon that the joint angle of the joint mechanism part supporting the tare of the robot 1 becomes smaller than the joint angle in the target posture (Fig. 14 (A), Fig. 15(A)) occurs. Thereby, in the landing state, the distance $H_2$ in the gravity direction from an arbitrary part in the robot 1 apart from the floor (for example, the center of gravity G of the robot 1) to an arbitrary another part in the above robot 1 closest to the floor at the time (for example, the sole and the finger of the robot 1) becomes smaller than a distance $H_1$ in that target posture.

On the other hand, when the robot 1 is in a floating state by being lifted by holding a part of the body, on each joint mechanism part lower than the above part held by the user, the weight of the body part further lower than that joint mechanism part is applied as a load. Therefore, the corresponding actuator $A_1$ - $A_{17}$ in that joint mechanism part cannot keep the rotational angle of the output shaft to the target angle predetermined as to the target posture at the time (Fig. 14(A), Fig. 15(A)) by the effect of this load, and the servo deviation that the rotational angle of the output shaft of the above actuator $A_1$ - $A_{17}$ becomes larger than the target angle occurs.

As a result, as shown in Figs. 14(B) and 15(B), at this time, the phenomenon that the joint angle of the joint mechanism part of the robot 1 that locates lower than the part held by the user becomes larger than the joint angle in the target posture occurs. Thereby, in the lifted state, a distance $H_3$ in the gravity direction from an arbitrary part in the robot 1 apart from the floor (for example, the center of gravity G of the robot 1) to an arbitrary another part closest to the floor at the time (for example, the sole and the finger of the robot 1) becomes larger than the distance $H_1$ in the target posture.

Then, in this robot 80 according to the third embodiment, detection processing in the lifted state in step SP3 of the first lifting-in-arms control processing procedure RT1 (Fig. 6) and detection processing in the release of the lifted-in-arms state in step SP8 are performed, by respectively calculating the distance in the gravity direction from the center of gravity G of the robot 80 in the target posture at the time to a landing part in the target posture (hereinafter, this is referred to as a target height of the center of gravity) and the distance in the gravity direction from the center of gravity G of the robot 80 at present to the landing part (hereinafter, this is referred to as a measured height of the center of gravity) by forward kinematics, and comparing these sizes.

However, in this case, also the case that the measured height of the center of gravity of the robot 80 from the floor has changed to be smaller or larger than the target height of the center of gravity by some reason other than the release of the lifted or lifted-in-arms state of the robot 80 by the user can be considered. Therefore, some countermeasure to avoid a recognition mistake becomes necessary.

Then, in this robot 80, it is determined that the lifted state and the lifted-in-arms state were released as the above, by setting a requirement to meet following three conditions: first, the state that the measured height of the center of gravity of the above robot 80 is larger or smaller than the target height of the center of gravity at the time is met in a certain period of time, secondly, a gravity direction detected by the acceleration sensor 65 (Fig. 5) is stable (that is, the posture of the robot 80 is stable), and thirdly, on plural parts close to the floor, similar thing can be said about the measured height of the center of gravity of the robot 80.

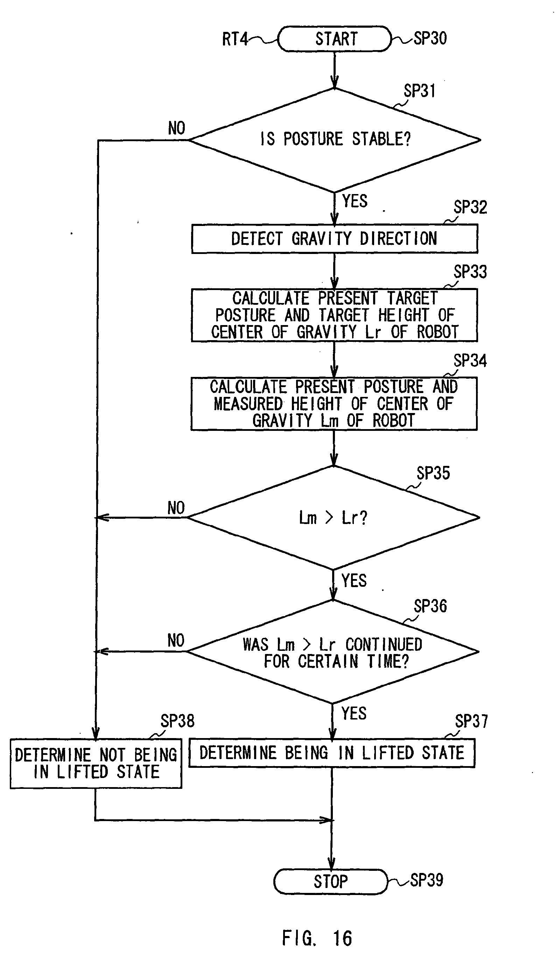

Here, such detection processing of the release of the lifted state and the lifted-in-arms state is performed according to a lifting state detection processing procedure RT4 shown in Fig. 16 or a state release detection processing procedure RT5 shown in Fig. 16, under the control of a main control part 81 shown in Fig. 5 that integrates the operation control of this whole robot 80, based on a control program stored in its internal memory 81A (Fig. 5).

Practically, if the main control part 81 proceeds to step SP3 of the first lifting-in-arms control processing procedure RT1 (Fig. 6), the main control part 81 starts the lifting state detection processing procedure RT4 shown in Fig. 16 in step SP30. In the following step SP31, the main control part 81 determines whether or not the posture of the robot 80 is stable, based on the value of the acceleration detection signal S2B from the acceleration sensor 65 obtained in step SP1 of the first lifting-in-arms control processing procedure RT1 (Fig. 6).

If a negative result is obtained in this step SP31, the main control part 81 proceeds to step SP38. After that the robot 80 is not in the lifted state at present, the main control part 81 proceeds to step SP39 to stop this lifting state detection processing procedure RT4. Then, the main control part 81 returns to step SP1 of the first lifting-in-arms control processing procedure RT1.

On the contrary, if an affirmative result is obtained in step SP31, the main control part 81 proceeds to step SP32 to detect a gravity direction, based on the value of the acceleration detection signal S2B from the acceleration sensor 65 obtained in step SP1 of the first lifting-in-arms control processing procedure RT1 (Fig. 6).

Then, the main control part 81 proceeds to step SP33 to calculate the target posture of the robot 80 at the time, and the target height of the center of gravity in the above target posture on the basis of the forward kinematics, based on the present target angle of each actuator $A_1$ - $A_{17}$.

Concretely, the main control part 81 calculates a target height of the center of gravity Lr by assuming each target angle of the joint angle of each joint mechanism part between the center of gravity of the robot 80 in the target posture and the landing part as $\theta_{r1}$ $\theta_{rn}$ respectively, and assuming an arithmetic operation to obtain the target height of the center of gravity by using them, on the basis of the forward kinetics as $L(\theta i)$ (i = 1, 2, ..., n), by the following equation:

$$Lr = L(\theta_{r1}, ..., \theta_{rn}) \tag{1}$$

Furthermore, in the following step SP34, the main control part 81 calculates the present posture of the robot 80 and the present measured height of the center of gravity Lm on the basis of the forward kinematics, based on the present angle of the output shaft of the corresponding actuator $A_1$ - $A_{17}$ obtained from each potentiometer $P_1$ - $P_{17}$ based on angle detection signals $S2D_1$ - $S2D_{17}$ in step SP1 of the first lifting-in-arms control processing procedure RT1 (Fig. 6).

Concretely, the main control part 50 calculates the measured height of the center of gravity Lm by assuming the present measured value of the joint angle of each joint mechanism part between the center of gravity of the robot and the landing part as $\theta_{m1}$ - $\theta_{mn}$ respectively, by the following equation:

$$Lm = L(\theta_{m1}, ..., \theta_{mn}) \tag{2}$$

At this time, the main control part 50 calculates this measured height of the center of gravity Lm on plural parts landing at the time in that posture, for example, if the robot is in a standing posture shown in Fig. 14, on the both soles, and if the robot is in a posture on four limbs as shown in Fig. 15, on the both hands and the both soles, respectively.

Then, the main control part 81 proceeds to step SP35 to determine whether or not all the measured heights of the center of gravity Lm calculated in step SP44 are larger than the target height of the center of gravity Lr.

Here, obtaining a negative result in this step SP35 means that the measured height of the center of gravity Lm is smaller than the target height of the center of gravity Lr, that is, it can be determined that comparing to the target postures at that time shown in Figs. 14(A) and 15(A), the present posture of the robot 80 is in a posture in the landing state as shown in Figs. 14(C) and 15(C) (hereinafter, this is referred to as a landing state posture).

Therefore, at this time, the main control part 81 proceeds to step SP38 to determine that the robot 80 is not in a lifted state at present, and then proceeds to step SP39 to stop this lifting state detection processing procedure RT4. Then, the main control part 81 returns to step SP1 of the first lifting-in-arms control processing procedure RT1 (Fig. 6).

On the contrary, obtaining an affirmative result in step SP35 means that the measured height of the center of gravity Lm is larger than the target height of the center of gravity Lr, that is, it can be determined that comparing to the target posture at that time as shown in Figs. 14(A) and 15(A), the present posture of the robot 80 is in a posture in a floating state as shown in Figs. 14(B) and 15(B) (hereinafter, this is referred to as a floating state posture).

Therefore, at this time, the main control part 81 proceeds to step SP36 to determine whether or not the state that the measured height of the center of gravity Lm is larger than the target height of the center of gravity Lr has been continued for a certain period of time. If a negative result is obtained, the main control part 81 proceeds to step SP38 to determine that the robot 80 is not in a lifted state at present. Then, the main control part 81 proceeds to step SP39 to stop this lifting state detection processing procedure RT4, and then returns to step SP1 of the first lifting-in-arms control processing procedure RT1 (Fig. 6).

On the contrary, if an affirmative result is obtained in step SP36, the main control part 81 proceeds to step SP37 to determine that the robot 80 is in a lifted state at present. Then, the main control part 81 proceeds to step SP39 to stop this lifting state detection processing procedure RT4, and then proceeds to step SP4 of the first lifting-in-arms control processing procedure RT1 (Fig. 6).

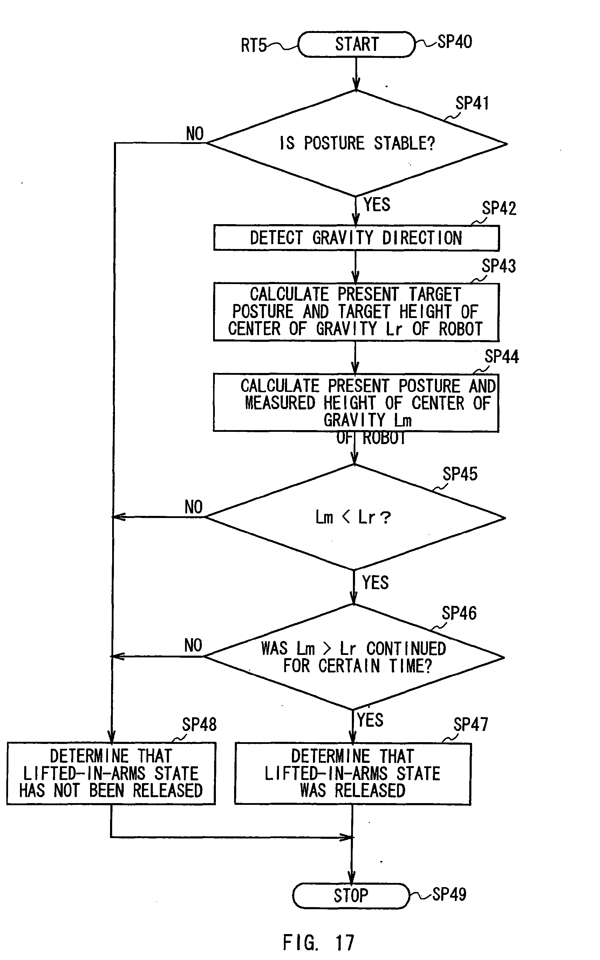

On the other hand, if the main control part 81 proceeds to step SP7 of the first lifting-in-arms control processing procedure RT1, the main control part 81 starts a lifted-in-arms state release detection processing procedure RT5 shown in Fig. 17 in step SP40. Then, the main control part 81 performs the following processing of steps SP41 - SP44 similarly to steps SP31 - SP34 of the lifted state detection processing procedure RT4 (Fig. 16).

Then, the main control part 81 proceeds to step SP45 to determine whether or not the measured height of the center of gravity Lm calculated in step SP44 is smaller than the target height of the center of gravity Lr calculated in step SP43.

Here, obtaining a negative result in this step SP45 means that the measured height of the center of gravity Lm is larger than the target height of the center of gravity Lr, that is, it can be determined that comparing to the target posture at that time as shown in Figs. 14(A) and 15(A), the present posture of the robot 80 is in a floating state posture as shown in Figs. 14(B) and 14(B).

Therefore, at this time, the main control part 81 proceeds to step SP48 to determine that the robot 80 still has not been released from the lifted-in-arms state at present, and then proceeds to step SP49 to stop this lifted-in-arms state release detection processing procedure RT5. Then, the main control part 81 returns to step SP7 of the first lifting-in-arms control processing procedure RT1 (Fig. 6).

On the contrary, obtaining an affirmative result in step SP45 means that the measured height of the center of gravity Lm is smaller than the target height of the center of gravity Lr, that is, it can be determined that comparing to the target posture at that time as shown in Figs. 14(A) and 15(A), the present posture of the robot is in a landing state posture as shown in Figs. 14(C) and 15(C).

Therefore, at this time, the main control part 81 proceeds to step SP46 to determine whether or not the state that the measured height of the center of gravity Lm is smaller than the target height of the center of gravity Lr was continued for a predetermined certain time. If a negative result is obtained, the main control part 81 proceeds to step SP48 to determine that the robot 80 has not been released from the lifted-in-arms state at present. Then, the main control part 81 proceeds to step SP49 to stop this lifted-in-arms state release detection processing procedure RT5, and then returns to step SP7 of the first lifting-in-arms control processing procedure RT1 (Fig. 6).

On the contrary, if an affirmative result is obtained in step SP46, the main control part 81 proceeds to step SP47 to determine that the robot 80 is not lifted in the user s arms at present. Then, the main control part 81 proceeds to step SP49 to stop this lifted-in-arms state release detection processing procedure RT5, and then, proceeds to step SP8 of the first lifting-in-arms control processing procedure RT1 (Fig. 6).

In this manner, this main control part 81 can detect that the lifted state and the lifted-in-arms state were released by using the servo deviation.

(3-2) Operation and Effects of This Embodiment

According to the above structure, the robot 80 determines that the robot 80 is, at present, in a lifted state when the state that the measured height of the center of gravity is larger than the target height of the center of gravity at the time has been continued for a certain time, the posture of the robot 80 at that time is stable, and similar thing can be said as to the measured height of the center of gravity of the robot 80 on plural parts close to the floor. Then, the robot 80 stops all of the present motions, and shifts to the initial lifted-in-arms posture, and then executes lifting-in-arms control operation.

Furthermore, the robot 80 determines that the lifted-in-arms state was released when the state that the measured height of the center of gravity is smaller than the target height of the center of gravity at that time was continued for a certain time, the posture of the robot 80 at that time is stable, and similar thing can be said as to the measured height of the center of gravity of the robot 80 on plural parts close to the floor. Then, the robot 80 determines the present posture, and shifts to a standing posture and a lying posture.

Accordingly, according to the robot 80, similarly to the robot 70 according to the second embodiment, not only in the case where the robot 70 was lifted by holding the grip handle 2A but also in the case where the robot 70 was lifted by holding a part other than the grip handle 2A, the robot 70 can surely detect this. Also in the lifted-in-arms state in the case where the robot 70 was lifted by holding that part other than the rip handle 2A, the occurrence of injury to the user caused by that the robot 70 moves the arms and legs can be effectively prevented, and safety of the user can be further maintained.

Furthermore, according to this robot 80, a device such as a new sensor for detection processing of the release of the above lifted state or lifted-in-arms state is unnecessary. Therefore, the robot 80 can be constructed lighter and smaller than the robot 70 according to the second embodiment, for example.

According to the above structure, the robot 80 determines that the robot 80 is in a lifted state when the state that the measured height of the center of gravity is larger than the target height of the center of gravity at the time was continued for the certain time, the posture of the robot 80 at that time is stable, and similar thing can be said as to the measured height of the center of gravity of the robot 80 on plural parts closer to the floor. Then, the robot 80 stops all of the present motions, and shifts to the initial lifted-in-arms posture, and then executes lifting-in-arms control operation. On the other hand, the robot 80 determines that the lifted-in-arms state was released when the state that the measured height of the center of gravity is smaller than the target height of the center of gravity at that time continued for the certain time, the posture of the robot 80 at that time is stable, and similar thing can be said as to the measured height of the center of gravity of the robot 80 on plural parts closer to the floor. Then, the robot 80 determines the present posture, and shifts to a standing posture and a lying posture. Thereby, in addition to be able to obtain similar effects to the second embodiment, the robot 80 can be constructed lighter and smaller than the robot according to the second embodiment. Thus, a robot that can remarkably improve the entertainment ability can be realized.

(4) Fourth Embodiment

(4-1) Structure of Robot According to This Embodiment

Referring to Figs. 1 - 4, reference numeral 90 denotes a robot according to a fourth embodiment as a whole. The robot 90 is formed similarly to the robot 70 according to the second embodiment except the point that in the lifted-in-arms state, the robot 90 is designed to shift its own posture to a predetermined put posture according to the user's request.

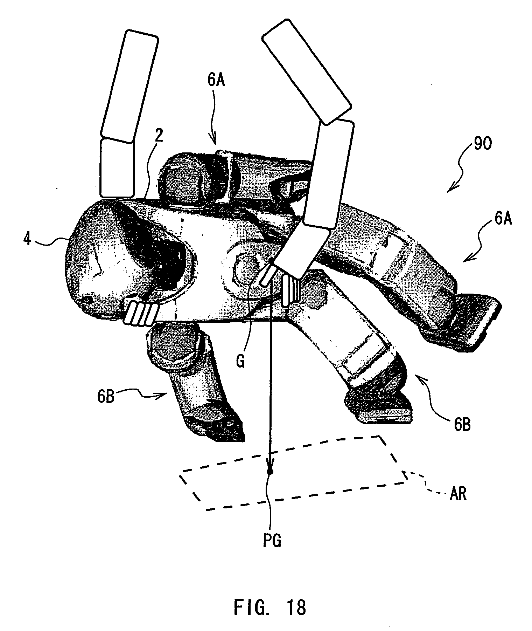

That is, the user does not always hold a grip handle when the user puts down the robot 90 holding in his/her arms on the floor. For instance, as shown in Fig. 18, it is possible that the user hold the robot 90 by making it sideways and supporting the lower shoulder part and the lower hip part.

Then, if assuming that the robot 1 does not shift to any put posture in such case, the situation that the posture of the robot 90 when in landing becomes unstable and falls down after landing occurs, and it is likely to make scratches on the body and to make defects in precision parts such as various external sensors and internal sensors contained in the body.

Therefore, in the robot 90 according to this third embodiment, in step SP7 of the first lifting-in-arms control processing procedure RT1 (Fig. 6), when the user made a declaration of intention that the robot 90 should shift to a put posture, as shown in Fig. 18, a part which should land is predetermined so that the projected point of the center of gravity G of the robot 90 (hereinafter, this is referred to as a projected point of the center of gravity) $P_G$ is located in an area on the floor sandwiched between or surrounded by the landing parts of the robot 90 (hereinafter, this is referred to as a landing planned area) AR, and the robot 90 moves movable parts such as the arm units 5A, 5B and the leg units 6A, 6B so that the robot 90 lands from that part.

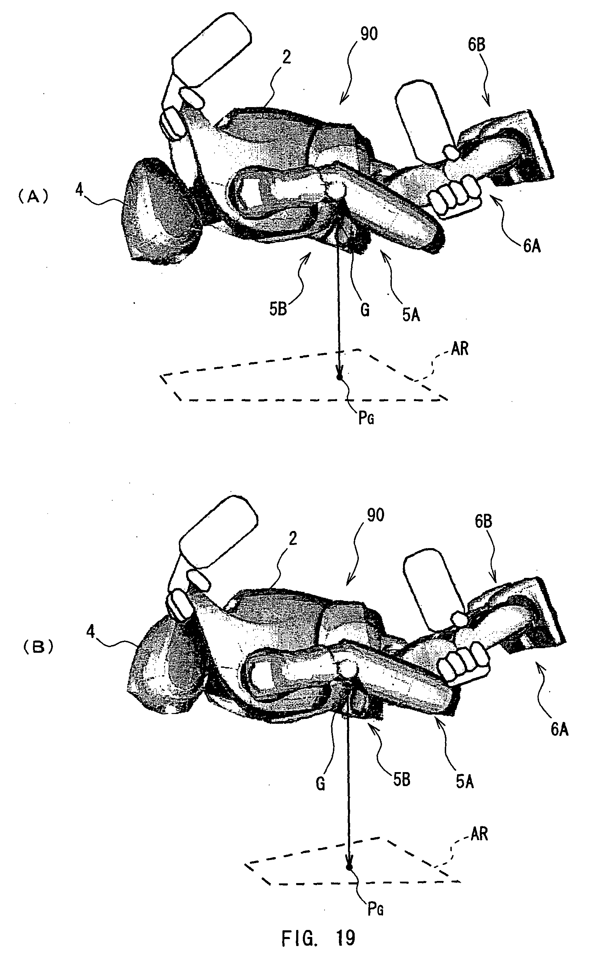

At this time, as shown in Fig. 19(A), also the case that a landing planned area AR including a projected point of the center of gravity $P_G$ cannot be formed by the arm units 5A, 5B and the leg units 6A, 6B occurs, from structural limitations on the robot 90 and being held by the user. However, in this case, as shown in Fig. 19(B), to avoid supporting the tare by the head unit 4 in which precision devices such as the CCD cameras 60A, 60B and the microphone 61 are closely provided, the landing part is selected so that a part comparatively structurally strong, such as the body unit 2, lands.

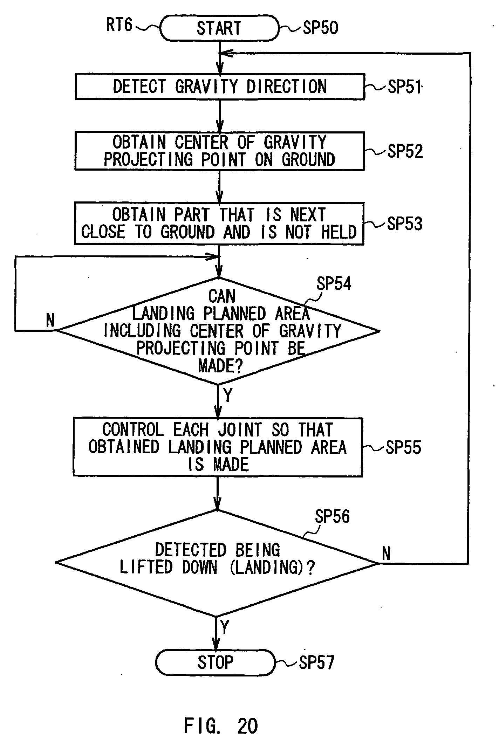

Here, the above put posture control processing is performed according to a putting-on posture control processing procedure RT6 shown in Fig. 20, under the control of a main control part 91 shown in Fig. 12 that integrates the operation control of the whole of this robot 90, based on a control program stored in its internal memory 91A (Fig. 12).

Practically, in step SP7 of the first lifting-in-arms control processing procedure RT1 (Fig. 6), if a declaration of intention that the robot 90 should shift to a put posture is given from the user by talking to the robot 90, such as "I will put on you." and depressing the touch sensor 63 disposed at the shoulder part, the main control part 91 starts this putting posture control processing procedure RT6 in step SP50, and in the following step SP51, the main control part 91 detects the gravity direction based on the acceleration detection signal S2B supplied from the acceleration sensor 65 (Fig. 12).

Then, the main control part 91 proceeds to step SP52 to obtain the position G(x, y) of the projected point of the center of gravity of the robot 90 at that time, by assuming the mass of each part "i" (i = 1, 2, ...) of the body of the robot 90 as $m_i$, and the distances in the x-direction and the y-directions from the center of gravity of that part as $x_i$, $y_i$ respectively, by the following equation:

$$G\ (x,\ y)\ =\ \left[\frac{\sum (m_i \times x_i)}{\sum m_i},\ \frac{\sum (m_i \times y_i)}{\sum m_i}\right] \qquad \cdots\ (3)$$

Then, the main control part 91 proceeds to step SP53 to select the part closest to the ground and not held in the robot 90 as a part proposed for a part to land (hereinafter, this is referred to as a part proposed for landing), based on each recognition result of the posture of the robot 90 at that time that was recognized based on the angle detection signal $S2D_1$ - $S2D_{17}$ supplied from each of the potentiometers $P_1$ - $P_{17}$ (Fig. 12) and the acceleration detection signal $S2B$ supplied from the acceleration sensor 65 (Fig. 12), and the part not being held that was recognized based on the force detection signal $SID_1$ $S1D_{17}$ supplied from each force sensor $FS_1$ $FS_{17}$. At this time, the main control part 91 selects the above part proposed for landing, except the head unit 4 in that precision devices are closely provided, and parts structurally weak other than that.

Then, the main control part 91 proceeds to step SP54 to determine whether or not the landing planned area AR can be formed so as to include the projected point of center of gravity $P_G$ by the part proposed for landing selected in step SP53, by moving some of joint mechanism part not being held as the occasion demands.

If a negative result is obtained in this step SP54, the main control part 91 returns to step SP53 to select a part closer to the floor next to the part precedingly selected as the part proposed for landing. Then, the main control part 91 proceeds to step SP54 to determine whether or not the landing planned area AR can be formed so as to include the projected point of center of gravity $P_G$ by simultaneously using the precedingly selected part as the part proposed for landing and the part selected this time as the part proposed for landing.

If a negative result is obtained in this step SP54, the main control part 91 returns to step SP53, and then repeats the loop of steps SP53 - SP54 - SP53 until an affirmative result is obtained in step SP54 while sequentially similarly selecting the part closest to the floor as well as possible as a part proposed for landing.

Then, if the main control part 91 soon finishes to select some (parts) proposed for forming the landing planned area AR that include the projected point of center of gravity $P_G$ inside, and an affirmative result is obtained in step SP54, the main control part 91 proceeds to step SP55 to drive the corresponding actuator $A_1$ - $A_{17}$ so as to form the corresponding landing planned area AR.

As a result, for example, if the right arm unit 5B and the right leg unit 6B are selected as the parts proposed for landing, as shown in Fig. 18, the arm unit 5B and the leg unit 6B or the like are driven so that these arm unit 5B and leg unit 6B land precedingly to the body unit 2, and so that when they land, the projected point of center of gravity $P_G$ is located in the landing planned area AR formed by these arm unit 5B and leg unit 6B.

On the other hand, for example, if the both arm units 5A, 5B and the chest part of the body unit 2 are selected as the parts proposed for landing, as shown in Fig. 19, each of the arm units 5A and 5B or the like are driven so that each of these arm units 5A and 5B and the chest part of the body unit 2 simultaneously lands, and so that when they land, the projected point of center of gravity $P_G$ is located in the landing planned area AR formed by these arm units 5A and 5B and the chest part of the body unit 2. Note that, at this time, the head unit 4 is driven to lean back so that when each of the arm units 5A and 5B and the chest part of the body unit 2 land, the head unit 4 does not land.

Then, the main control part 91 proceeds to step SP56 to determine whether or not the body of the robot 90 landed, based on the acceleration detection signal S2B from the acceleration sensor 65 (Fig. 12) and the pressure detection signal S1C from the corresponding touch sensor 63 (Fig. 12) or the like. If an affirmative result is obtained, the main control part 91 returns to step SP51, and then repeats the rule of steps SP51 to SP56 - SP51 until an affirmative result is obtained in step SP56.

If the main control part 91 soon detects that the body of the robot 90 landed based on the acceleration detection signal S2B from the acceleration sensor 65 and the pressure detection signal S1C from the corresponding touch sensor 63 or the like, the main control part 91 proceeds to step SP57 to stop this putting posture control processing procedure RT6. Then, the main control part 91 proceeds to step SP8 of the first lifting-in-arms control processing procedure RT1 (Fig. 6).

In this manner, in the main control part 91, the posture of the robot 90 can be shifted to a predetermined put posture corresponding to the posture at the time, according to a command from the user.


(4-2) Operation and Effects of This Embodiment


According to the above configuration, the robot 90 selects a landing part so that the projected point of center of gravity $P_G$ is located in the landing planned area AR according to a declaration of intention from the user that the robot 90 should shift to a put posture, and moves movable parts such as the arm units 5A, 5B and the leg units 6A, 6B so as to land from that part.

Accordingly, in this robot 90, a possibility that scratches occur on the body and troubles occur in precision parts such as various external sensors and the internal sensor contained in the body because of the occurrence of such situation that the posture of the robot 90 when in landing becomes unstable and the robot 90 falls down after landing can be effectively prevented.

Furthermore, by operating the robot 90 as the above, a crouching gesture when in landing that human beings generally do can be expressed. Therefore, the entertainment ability as a humanoid-type entertainment can be improved.

According to the above configuration, the robot 90 selects a landing part so that the projected point of center of gravity $P_G$ is located in the landing planned area AR according to a declaration of intention from the user that the robot 90 should shift to a put posture, and changes its own posture so as to land from that part as the occasion demands. Thereby, gestures as a human being can be expressed while effectively preventing the occurrence of scratches and the occurrence of troubles in precision parts when the robot 90 is put down. Therefore, a robot that can improve the entertainment ability while maintaining the body maintenance can be realized.

(5) Fifth Embodiment

(5-1) Structure of Robot According to This Embodiment

Referring to Figs. 1 - 4, reference numeral 100 denotes a robot according to a fifth embodiment as a whole. The robot 100 is formed similarly to the robot 90 according to the fourth embodiment, except the point that when the body was lifted in an unstable posture, the robot 100 is designed to operate so as to make the above posture stable.

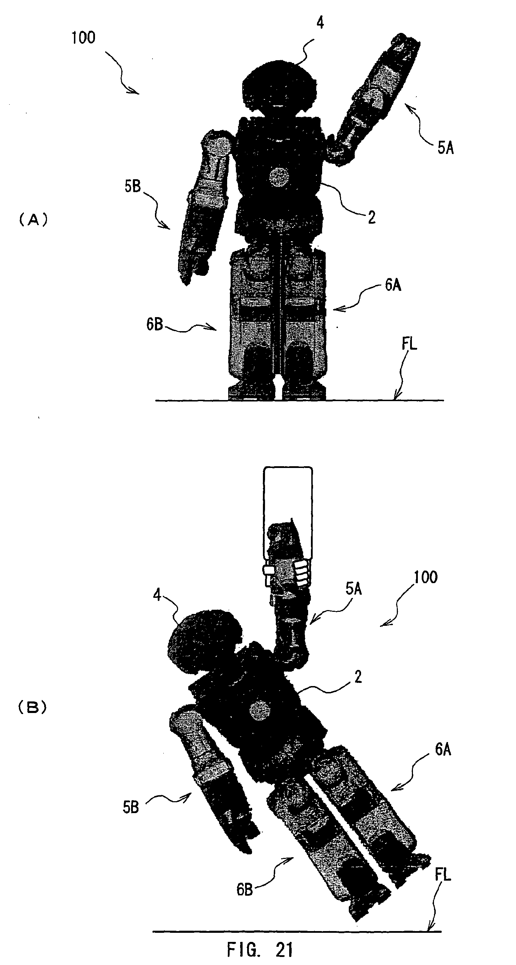

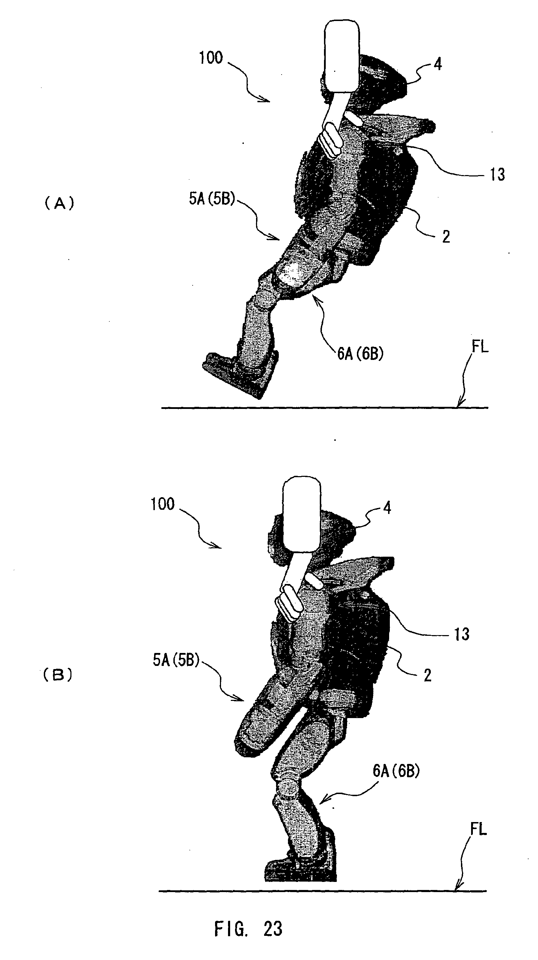

That is, when the user lifts the robot 100, the user does not always select a holding part by considering the body stability of the robot after lifted. For instance, it is also possible that when the robot 100 raised one arm unit 5A as Fig. 21(A), the user lifts the robot 100 by holding the tip of this arm unit 5A as Fig. 21(B), and the user lifts the robot 100 by holding both shoulders of the robot 100 in the state that the body is slanted as Fig. 23(A).

For instance, in the case where the robot 100 was lifted by holding one arm unit 5A as Fig. 21(B), from a balance between the position of the center of gravity and the operating point (point held by the user) of the robot 100, the lifted body of the robot 100 swings in a pendulum, and then the body of the robot 100 becomes statically determinate in the state that the position of the center of gravity and the operating point of the robot 100 are balanced as Fig. 21 (B). On the other hand, in the case where the robot 100 was lifted in the state that the body is slanted by holding the both shoulders of the robot 100 as Fig. 23(A), the robot 100 becomes statically determinate in that state.

In this case, in the state that the body of the robot 100 is statically determinate in an unstable posture as the above, if the servo gains of the actuators $A_5$ - $A_7$ of the shoulder joint mechanism part 13 (see Fig. 4) and the actuator $A_8$ (see Fig. 4) of the elbow joint mechanism part 24 are kept to be high, a large load for the weight of the robot 100 is applied to these actuators $A_5$ - $A_8$, and on the other hand, also to the lifting user, not only the weight of the robot 100 but also a load by the rotational moment of the robot 100 in the unstable posture are applied.

Then, in this robot 100 according to the fifth embodiment, when the body was lifted in an unstable posture, the servo gains of the actuators $A_1$ - $A_{17}$ in each joint mechanism part existing between the part held by the user at that time and the body unit 2 are sufficiently lowered. Thereby, both of the loads applied to the actuators $A_1$ - $A_{17}$ supporting the tare of the robot 100 at that time and the load applied to the user lifting the robot 100 can be reduced.

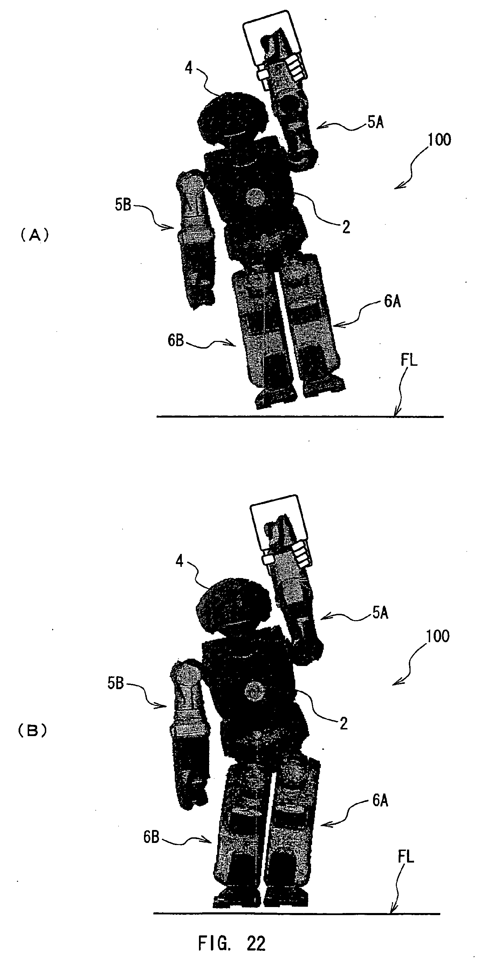

For instance, in an example of Fig. 21, if detecting the above lifting, the robot 1 sufficiently lowers the servo gains of all of the actuators $A_5$ - $A_8$ in the shoulder joint mechanism part 15 and the elbow joint mechanism part 24 corresponding to the held arm unit 5A. As a result, as shown in Fig. 22(A), the inclination of the body of the robot 100 is changed by the tare so as to shift to a stable posture in that the center of gravity is located at the lower side of the vertical direction of the held point (operating point), on the basis of the held arm unit 5A.

In an example of Fig. 23, the servo gains of all of the actuators $A_5$ - $A_7$ in both of the shoulder joint mechanism parts 13 are sufficiently lowered. As a result, as shown in Fig. 23(B), the inclination of the body of the robot 100 is changed so as to shift to a stable posture in that the position of the center of gravity of the robot 100 is located at the lower side of the vertical direction of the held point (operating point) in a view from the side, centering each arm unit 5A, 5B.

On the other hand, in the case where the robot 100 was lifted by holding the part that the body becomes unstable as the above, it is expected that the user immediately puts the robot 100 on the floor rather than shifts to the lifting-in-arms control processing as described above in steps SP4 - SP7 of the first lifting-in-arms control processing procedure RT1 of Fig. 6. Therefore, it is considered that it is desirable to immediately shift to the putting posture control processing.

Therefore, in this robot 100, if that the body was lifted in an unstable posture was detected, for example, as shown in Fig. 22(B) and Fig. 23(B), the put posture control processing described above with Fig. 20 is executed so that the held point (operating point) and the center of gravity G of the robot 100 are contained in the space on the landing possible area AR (Figs. 18, 19) described above with Figs. 18 and 19. Thereby, even if the robot 100 was immediately put on the floor FL, the robot 100 can land in a stable posture.

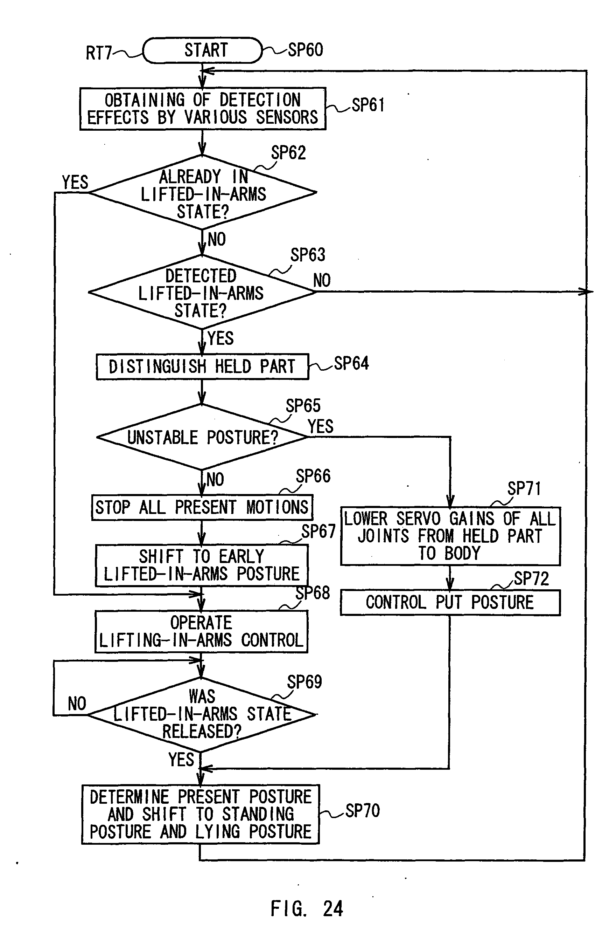

Here, such lifting-in-arms control processing of the robot 100 is performed according to a second lifting-in-arms control processing procedure RT7 shown in Fig. 24, under the control of a main control part 101 shown in Fig. 12 that integrates the operation control of the whole of the robot 100, based on a control program stored in its internal memory 101A (Fig. 12).

That is, if the switch of the robot 100 is turned on, the main control part 101 starts this second lifting-in-arms control processing procedure RT7 in step SP60, and performs the processing of the following steps SP61 - SP63 similarly to steps SP1- SP3 of the first lifting-in-arms control processing procedure RT1 described above with Fig. 6.

If an affirmative result is obtained in step SP63, the main control part 101 proceeds to step SP64 to specify the part held by the user (held part), based on the force detection signals $S1D_1$-$S1D_{17}$ supplied from each force sensor $FS_1$ - $FS_{17}$ respectively.

Next, the main control part 101 proceeds to step SP65 to determine whether or not the robot 100 is, at present, in an unstable posture, based on each recognition result on the present posture of the robot 100 that was recognized based on the angle detection signals $S2D_1$ - $S2D_{17}$ at this time supplied from each potentiometer $P_1$ - $P_{17}$ (Fig. 12) respectively, a gravity direction that was recognized based on the acceleration detection signal S2B supplied from the acceleration sensor 65 (Fig. 12), and the part held by the user specified in step SP64.

If a negative result is obtained in this step SP65, the main control part 101 proceeds to step SP66, and then performs the processing of steps SP66 - SP70 similarly to steps SP4 - SP8 of the first lifting-in-arms control processing procedure RT1 described above with Fig. 6.

On the contrary, if a negative result is obtained in this step SP65, the main control part 101 proceeds to step SP71 to lower the servo gains of all of the actuators $A_1$ - $A_{17}$ in all of the joint mechanism parts existing between the part held by the user specified in step SP64 and the body unit 2 to a sufficiently small value (for example, "0" or a predetermined value close to this).

Then, the main control part 101 proceeds to step SP72 to select a landing part so that the projected point of the center of gravity $P_G$ (Figs. 18 and 19) is located in the landing planned area AR (Figs. 18 and 19) according to the putting posture control processing procedure RT6 described above with Fig. 20, and changes its own posture so as to land from that part as the occasion demands.

Then, the main control part 101 proceeds to step SP69, and then performs the processing of steps SP69 and SP70 similarly to steps SP7 and SP8 of the first lifting-in-arms control processing procedure RT1 described above with Fig. 6.

In this manner, the main control part 101 performs the lifting-in-arms control processing when the robot 100 was lifted in an unstable posture.

(5-2) Operation and Effects of This Embodiment

According to the above construction, when the body was lifted in an unstable posture, the robot 100 sufficiently lowers the servo gains of the actuators $A_1$ - $A_{17}$ in each joint mechanism part existing between the part held by the user at that time and the body unit 2, and executes putting posture control processing immediately after this.

Accordingly, in this robot 100, even in the case where the body was lifted in an unstable posture, that a large load for the weight of the robot 100 is applied to the corresponding actuator $A_1$ - $A_{17}$ and a load by rotational moment of the robot 100 in an unstable posture is applied to the lifting user can be effectively prevented. Therefore, a load on the user lifting the robot 100 can be effectively reduced while preventing damage caused by the above lifting.

Furthermore, in this case, this robot 100 executes the putting posture control processing so that the held point (operating point) and the center of gravity G of the robot 100 are contained in the space on the landing possible area AR, so that even if the robot 100 was immediately put on the floor FL, the robot 100 can land in a stable posture. Therefore, a fall after landing can be effectively prevented, and also a motion as crouching in landing that human beings generally do can be expressed.

According to the above construction, when the body of the robot 100 was lifted in an unstable posture, the servo gains of the actuators $A_1$ - $A_{17}$ in each joint mechanism part existing between the part held by the user at that time and the body unit 2 is sufficiently lowered, and the putting posture control processing is executed immediately after this. Thereby, a load on the user lifting the robot 100 can be effectively reduced while preventing damage caused by the above lifting. Thus, a robot that can improve the entertainment ability can be realized.

Furthermore, according to the above construction, the putting posture control processing is executed so that the held point (operating point) and the center of gravity G of the robot 100 are contained in the space on the landing possible area AR. Thereby, a fall after landing can be effectively prevented, and also a motion as righting the posture in landing as if human beings do can be expressed. Thus, a robot that can improve the entertainment ability can be realized.

(6) Other Embodiments

In the aforementioned embodiments, it has dealt with the case where as Figs. 1 to 4, the present invention is applied to the robot 1, 70, 80, 90, 100 in that plural leg units 6A and 6B having a multi-step joint mechanism are respectively connected to the body unit 2. However, the present invention is not only limited to this but also can be widely applied to various robot apparatuses other than this.

In the aforementioned embodiments, it has dealt with the case where sensor means for detecting the external and/or the internal state, the grip switch (holding sensor) 63G provided on the grip handle (holding part) 2A, the sole force sensors 63L, 63R provided on the foot blocks 32, and the acceleration sensor 65 are applied. However, the present invention is not only limited to this but also may be widely applied to various sensor means other than this, provided that it can be provided for the determination of whether or not to be in a state lifted in the user's arms or a lifted state.

In the aforementioned embodiments, it has dealt with the case where the main control part 50 provided in the body unit 2 is applied, as control means for controlling the actuators (driving systems) $A_1$ - $A_{17}$, after whether or not the external and/or the internal state is in a state lifted in the user's arms or a lifted state, so as to stop the operation of the thigh joint mechanism part 36, the knee joint mechanism part 38 and the ankle joint mechanism part 41 based on the above determination result. However, the present invention is not only limited to this but also may be widely applied to control means having various structure other than this.

Furthermore, as each joint mechanism, the neck joint mechanism part 13 in the neck part 3, and the shoulder joint mechanism part 20 and the elbow joint mechanism part 24 in each arm unit 5A, 5B may be included. In this case, when whether or not to be in a lifted-in-arms state or a lifted state was determined, the main control part 50 serving as control means may control the actuators (driving systems) $A_1$ - $A_{17}$ so as to stop the operation of the neck joint mechanism part 13, the shoulder joint mechanism part 20 and the elbow joint mechanism part 24.

In the aforementioned embodiments, it has dealt with the case where when the robot is in a state lifted in the user's arms, the main control part 50 serving as control means controls the actuators (driving systems) $A_1$ - $A_{17}$ for operating the thigh joint mechanism part 36, the knee joint mechanism part 38 and the ankle joint mechanism part 41 so as to make the posture of each leg unit 6A, 6B accord with the arms. However, the present invention is not only limited to this but also briefly, various control methods other than this may be adopted, provided that when the robot is in a state lifted in the user's arms, the robot can make the user feel a reaction close to lifting a child in his/her arms.

As each joint mechanism, the neck joint mechanism part 13 in the neck part 3, and the shoulder joint mechanism part 20 and the elbow joint mechanism part 24 in each arm unit 5A, 5B may be included. In this case, when the robot is in a state lifted in the user's arms, the main control part 50 serving as control means may control the actuators (driving systems) $A_1$ - $A_{17}$ for operating the neck joint mechanism part 13, the shoulder joint mechanism part 20 and the elbow joint mechanism part 24 so as to make the posture of the neck part 3 and each arm unit 5A, 5B accord with the user s arms.

In the aforementioned embodiments, it has dealt with the case where when the robot is in the state lifted in the user s arms and the body unit 2 is sideways, the main control part 50 serving as control means controls the actuators (driving systems) $A_1$ - $A_{17}$ so that the thigh joint mechanism part 36, the knee joint mechanism part 38 and the ankle joint mechanism part 41 corresponding to each leg unit 6A, 6B become flexible, and on the other hand, when the body unit 2 is vertical, the main control part 50 controls the actuators (driving systems) $A_1$ - $A_{17}$ so that the thigh joint mechanism part 36, the knee joint mechanism part 38 and the ankle joint mechanism part 41 corresponding to each leg unit 6A, 6B becomes inflexible. However, the present invention is not only limited to this but also briefly, various control methods other than this may be adopted, provided that when the robot is in a state lifted in the user's arms, the robot can make the user feel a reaction close to lifting a child in his/her arms.

Furthermore, as each joint mechanism, the neck joint mechanism part 13 in the neck part 3, and the shoulder joint mechanism part 20 and the elbow joint mechanism part 24 in each arm unit 5A, 5B may be included. In this case, when the robot is in the state lifted in the user s arms and the body unit 2 is sideways, the main control part 50 serving as control means controls the actuators (driving systems) $A_1$ - $A_{17}$ so that the neck joint mechanism part 13, the shoulder joint mechanism part 20 and the elbow joint mechanism part 24 corresponding to the neck part 3 each arm unit 5A, 5B become flexible, and on the other hand, when the body unit 2 is vertical, the main control part 50 controls the actuators (driving systems) $A_1$ - $A_{17}$ so that the neck joint mechanism part 13, the shoulder joint mechanism part 20 and the elbow joint mechanism part 24 corresponding to the neck part 3 and each arm unit 5A, 5B becomes inflexible.

In the aforementioned embodiments, it has dealt with the case where false compliance control such that the main control part 50 serving as control means previously sets the following degrees of the thigh joint mechanism part 36, the knee joint mechanism part 38 and the ankle joint mechanism part 41, and when deviation occurred in the posture of each leg unit 6A, 6B corresponding to the lifted-in-arms state, the main control part 50 controls the actuators (driving systems) $A_1$ - $A_{17}$ according to the control amount in that the following degree was added to the above deviation is applied. However, the present invention is not only limited to this but also briefly, various control methods other than this may be adopted, provided that when the robot is in a state lifted-in-arms with the user's arms, the robot can make the user feel a reaction close to lifting a child in his/her arms.

Furthermore, as each joint mechanism, the neck joint mechanism part 13 in the neck part 3, and the shoulder joint mechanism part 20 and the elbow joint mechanism part 24 in each arm unit 5A, 5B may be included. In this case, the main control part 50 serving as control means may previously set the following degrees of the neck joint mechanism part 13, the shoulder joint mechanism part 20 and the elbow joint mechanism part 24, and when deviation occurred in the posture of the neck part 3 and each arm unit 5A, 5B corresponding to the lifted-in-arms state, the main control part 50 may control the actuators (driving systems) $A_1$ - $A_{17}$ according to the control amount in that the following degree was added to the above deviation.

In the aforementioned embodiments, it has dealt with the case where the main control part 50 serving as control means determines the posture of the body unit 2 when the state lifted in the user's arms or the lifted state was released, and controls the actuators (driving systems) $A_1$ - $A_{17}$ for operating the thigh joint mechanism part 36, the knee joint mechanism part 38 and the ankle joint mechanism part 41 corresponding to each leg unit 6A, 6B according to the above determination result. However, the present invention is not only limited to this but also briefly, various control methods other than this may be adopted, provided that safety can be maintained and the naturality of appearances can be appeared after the state lifted in the user's arms or the lifted state was released.

Furthermore, as each joint mechanism, the neck joint mechanism part 13 in the neck part 3, and the shoulder joint mechanism part 20 and the elbow joint mechanism part 24 in each arm unit 5A, 5B may be included. In this case, the main control part 50 serving as control means may determine the posture of the body unit 2 when the state lifted in the user's arms or the lifted state was released, and may control the actuators (driving systems) $A_1$ - $A_{17}$ for operating the neck joint mechanism part 13, the shoulder joint mechanism part 20 and the elbow joint mechanism part 24 corresponding to the neck part 3 and each arm unit 5A, 5B according to the above determination result.

Furthermore, in the aforementioned fifth embodiment, it has dealt with the case where the posture control processing such that the operating point at which external force operates to the robot 100 and the center of gravity G of the robot 100 are detected, and the landing planned area AR in which a part of the robot 100 lands to the floor is calculated, and when the robot 100 rose from the floor by external force, the operating point and the center of gravity G are contained in the space on the landing planned area AR. However, the present invention is not only limited to this but also posture control processing such that a zero moment point (ZMP) is detected instead of the center of gravity G, and when the robot 100 rose from the floor by external force, the operating point and the center of gravity G are contained in the space on the landing planned area AR may be performed.

Industrial Utilization

The present invention is widely applicable to robot apparatuses in various forms other than humanoid robots.

**Claims**

1. A robot apparatus having a movable part, comprising:

    drive means for driving said movable part;
    control means for controlling said drive means;
    operating point detecting means for detecting an operating point at which external force operates on said robot apparatus;
    center of gravity detecting means for detecting the center of gravity of said robot apparatus; and
    landing planned area calculating means for calculating a landing planned area in which a part of said robot apparatus will contact with the floor; and
    said robot apparatus wherein;
    said control means controls said drive means when said robot apparatus rose from the floor by external force, in order to control said movable part so that said operating point and said center of gravity are contained in the space on said landing planned area.

2. A method for controlling a robot apparatus having a movable part, comprising:

    a first step of detecting an operating point at which external force operates on said robot apparatus, and the center of gravity of said robot apparatus, and also calculating a landing planned area in which a part of said robot apparatus will contact with the floor; and
    a second step of controlling said movable part so that said operating point and said center of gravity are contained in the space on said landing planned area, when said robot apparatus rose from the floor by external force.

3. A robot apparatus having a movable part, comprising:

center of gravity detecting means for detecting the center of gravity of said robot apparatus;

landing part calculating means for calculating the landing part of said robot apparatus on the floor; and

distance calculating means for calculating said distance between said center of gravity of said robot apparatus and said landing part; and

said robot apparatus wherein;

lifting-in-arms detection is performed based on the distance between said center of gravity of said robot apparatus and said landing part.

4. A method for controlling a robot apparatus having a movable part, comprising:

a first step of detecting the center of gravity of said robot apparatus, and also calculating the landing part of said robot apparatus on the floor; and

a second step of calculating a distance between said center of gravity of said robot apparatus and said landing part; and

a third step of performing lifting-in-arms detection based on said calculated distance.

5. A robot apparatus with plural leg parts having a multi-step joint mechanism respectively connected to the body part, comprising:

sensor means for detecting the external and/or the internal state;

state determining means for determining whether or not said external and/or internal state detected by said sensor means is the state held in the user's arms or the lifted state; and

control means for controlling a driving system so as to stop the operation of each of said joint mechanisms, based on the determination result by said state determining means.

6. The robot apparatus according to claim 5, comprising:

a grip part provided in said body part, to be gripped when the user lifts; and

a foot part provided in each of said leg parts, to respectively land when in standing upright; and

said robot apparatus wherein;

said sensor means is composed of a grip sensor provided on said grip part, to detect whether or not to be held by the user's arm, and a sole force sensor provided on each of said foot parts, to detect whether or not to be in a landing state.

7. A robot apparatus with plural leg parts having a multi-step joint mechanism respectively connected to the body part, comprising;

control means for controlling a driving system to operate each of said joint mechanisms so as to make the posture of each of said leg parts accord with said arms in the state lifted in the user's arms.

8. The robot apparatus according to claim 7, wherein;

said control means controls said driving system so that each of said joint mechanisms corresponding to each of said leg parts becomes flexible when it is in said lifted-in-arms state and said body part is sideways, on the other hand, said control means controls said driving system so that each of said joint mechanisms corresponding to each of said leg parts becomes inflexible when said body part is vertical.

9. The robot apparatus according to claim 7, wherein;

said control means previously sets the following degree of each of said joint mechanisms, and in the case where deviation occurred in the posture of each of said leg parts according to said lifted-in-arms state, said control means controls said driving system according to the control amount in that said following degree was added to the above deviation.

10. A robot apparatus with plural leg parts having a multi-step joint mechanism respectively connected to the body part, comprising;

control means for determining the posture of said body part when the state lifted in the user's arms or the lifted state was released, and controlling a driving system to operate each of said joint mechanisms corresponding to each of said leg parts according to the above determination result.

11. A method for controlling a robot apparatus with plural leg parts having a multi-step joint mechanism respectively connected to the body part, comprising:

a first step of detecting the external and/or the internal state;
a second step of determining whether or not said detected external and/or internal state is in the state lifted in the user's arms or the lifted state; and
a third step of controlling a driving system to stop the operation of each of said joint mechanisms, based on said determination result.

12. A method for controlling a robot apparatus with plural leg parts having a multi-step joint mechanism respectively connected to the body part, wherein;
when the robot apparatus is in the state lifted in the user's arms, a driving system to operate each of said joint mechanisms is controlled so as to make the posture of each of said leg parts accord with said arms.

13. The method for controlling a robot apparatus according to claim 12, wherein;
when the robot apparatus is in said lifted-in-arms state and said body part is sideways, said driving system is controlled so that each of said joint mechanisms corresponding to each of said leg parts becomes flexible, on the other hand, when said body part is vertical, said driving system is controlled so that each of said joint mechanisms corresponding to each of said leg parts becomes inflexible.

14. The method for controlling a robot apparatus according to claim 12, wherein;
the following degree of each of said joint mechanisms is previously set, and if deviation occurs in the posture of each of said leg parts according to said lifted-in-arms state, said driving system is controlled according to the control amount in that said following degree was added to the above deviation.

15. A method for controlling a robot apparatus with plural leg parts having a multi-step joint mechanism respectively connected to the body part, wherein;
the posture of said body part when the state lifted in the user's arms or the lifted state was released is determined, and a driving system to operate each of said joint mechanisms corresponding to each of said leg parts is controlled according to the above determination result.

FIG. 1

1 (70, 80, 90, 100)

4 HEAD UNIT

2A

63G

20

3

5A ARM UNIT

2 BODY UNIT

15

24

16

16

17

30

38

6B LEG UNIT

25

31

30

38

6A LEG UNIT

31

41

41

32

32

63R

63L

FIG. 2

FIG. 3

1 (70, 80, 90, 100)

4 HEAD UNIT

A₁

A₂

A₃

-13

A₄

SUB CON-
TROL PART

53B

2 BODY UNIT

5B ARM UNIT

5A ARM UNIT

53C

SUB CON-
TROL PART

50

MAIN CON-
TROL PART

51

PERIPHERAL
CIRCUIT

SUB CON-
TROL PART

53C

20

A₅

A₆

A₇

24

A₈

17

A₉

SUB CON-
TROL PART

A₁₀  53A

A₁₁

53D

SUB CON-
TROL PART

44

53D

SUB CON-
TROL PART

20

A₅

A₆

A₇

24

A₈

17

A₉

6B LEG UNIT

A₁₂

A₁₃

A₁₄

36

38

A₁₅

41

A₁₆

A₁₇

6A LEG UNIT

A₁₂

A₁₃

A₁₄

36

38

A₁₅

41

A₁₆

A₁₇

FIG. 4

FIG. 5

EP 1 607 191 A1

RT1 — ( START ) — SP0

OBTAINING OF DETECTION
RESULTS BY VARIOUS
SENSORS — SP1

SP2

YES ← ALREADY
IN LIFTED-IN-ARMS
STATE?

NO

SP3

DETECTED LIFTED
STATE? — NO →

YES

STOP ALL PRESENT
MOTIONS — SP4

SHIFT TO EARLY
LIFTED-IN-ARMS POSTURE — SP5

OPERATE
LIFTING-IN-ARMS
CONTROL — SP6

SP7

NO ← WAS
LIFTED-IN-ARMS STATE
RELEASED?

YES

DETERMINE PRESENT POSTURE
AND SHIFT TO STANDING
POSTURE AND LYING POSTURE — SP8

FIG. 6

FIG. 7

RT2 — START — SP10

CALCULATE TARGET POSITIONS AND MEASURED POSITIONS OF TOE, TIP OF ARM, ETC. — SP11

CALCULATE REFERENCE POSITION BASED ON DEVIATION AND OFFSET AMOUNT — SP12

CALCULATE EACH JOINT CONTROL AMOUNT BASED ON REFERENCE POSITION — SP13

DRIVE ACTUATOR CORRESPONDING TO EACH JOINT CONTROL AMOUNT — SP14

FIG. 8

FIG. 9

FIG. 10

(A)

(B)

FIG. 11

FIG. 12

RT3 — START — SP20

SP21

SATISFY
1ST – 3RD CONDITIONS
?
— YES

NO

SP22

SATISFY
2ND – 4TH CONDITIONS
?
— NO

YES

SP23

STRUCTURALLY
WEAK PART?
— NO

YES

WARN — SP24

SP25
DETERMINE BEING
LIFTED-IN-ARMS

SP26
DETERMINE BEING
LIFTED-IN-ARMS

STOP — SP20

FIG. 13

37

FIG. 14

FIG. 15

FIG. 16

RT5 — START — SP40

SP41

NO — IS POSTURE STABLE?

YES

DETECT GRAVITY DIRECTION — SP42

CALCULATE PRESENT TARGET POSTURE AND TARGET HEIGHT OF CENTER OF GRAVITY Lr OF ROBOT — SP43

CALCULATE PRESENT POSTURE AND MEASURED HEIGHT OF CENTER OF GRAVITY Lm OF ROBOT — SP44

SP45

NO — $Lm < Lr$ ?

YES

SP46

NO — WAS $Lm > Lr$ CONTINUED FOR CERTAIN TIME?

YES — SP47

DETERMINE THAT LIFTED-IN-ARMS STATE HAS NOT BEEN RELEASED — SP48

DETERMINE THAT LIFTED-IN-ARMS STATE WAS RELEASED

STOP — SP49

FIG. 17

FIG. 18

FIG. 19

RT6 — ( START ) — SP50

DETECT GRAVITY DIRECTION — SP51

OBTAIN CENTER OF GRAVITY
PROJECTING POINT ON GROUND — SP52

OBTAIN PART THAT IS NEXT
CLOSE TO GROUND AND IS NOT HELD — SP53

SP54

CAN
LANDING PLANNED AREA
INCLUDING CENTER OF GRAVITY
PROJECTING POINT BE
MADE?

N

Y

CONTROL EACH JOINT SO THAT
OBTAINED LANDING PLANNED AREA
IS MADE — SP55

SP56

DETECTED BEING
LIFTED DOWN (LANDING)?

N

Y

( STOP ) — SP57

FIG. 20

FIG. 21

FIG. 22

（A）

100

4

13

5A (5B)

2

6A (6B)

FL

（B）

100

4

13

5A (5B)

2

6A (6B)

FL

FIG. 23

FIG. 24

FIG. 25

EXPLANATION OF REFERENCE NUMERALS

1, 70, 80, 90, 100 ... ROBOT, 2 ... BODY UNIT, 2A ... GRIP HANDLE,
3 ... NECK PART, 4 ... HEAD UNIT, 5A, 5B ... ARM UNIT, 6A, 6B ... LEG UNIT,
13 ... NECK JOINT MECHANISM PART, 20 ... SHOULDER JOINT MECHANISM PART,
24 ... ELBOW JOINT MECHANISM PART, 32 ... FOOT BLOCK, 36 ... HIP JOINT
MECHANISM PART, 38 ... KNEE JOINT MECHANISM PART, 41 ... ANKLE JOINT
MECHANISM PART, 50, 71, 81, 91, 101 ... MAIN CONTROL PART, 63 ... TOUCH
SENSOR, 63G ... GRIP SWITCH, 63L, 63R ... SOLE FORCE SENSOR,
65 ... ACCELERATION SENSOR, A1 - A17 ... ACTUATOR, RT1 ... PROCESSING
PROCEDURE OF 1ST LIFTING-IN-ARMS CONTROL, RT2 ... PROCEDURE FOR
CONTROLLING FALSE COMPLIANCE, RT33 ... PROCEDURE FOR DETECTING LIFTED
STATE, RT4 ... PROCEDURE FOR DETECTING LIFTED-IN-ARMS STATE,
RT5 ... PROCEDURE FOR DETECTING RELEASE OF LIFTED-IN-ARMS STATE,
RT6 ... PROCESSING PROCEDURE OF PUT POSTURE CONTROL, RT7 ... PROCESSING
PROCEDURE OF SECOND LIFTING-IN-ARMS CONTROL.

## INTERNATIONAL SEARCH REPORT

| | International application No. |
|---|---|
| | PCT/JP2004/003917 |

**A. CLASSIFICATION OF SUBJECT MATTER**
Int.Cl⁷ B25J5/00, 13/00

According to International Patent Classification (IPC) or to both national classification and IPC

**B. FIELDS SEARCHED**

Minimum documentation searched (classification system followed by classification symbols)
Int.Cl⁷ B25J5/00, 13/00

Documentation searched other than minimum documentation to the extent that such documents are included in the fields searched
Jitsuyo Shinan Koho          1922-1996   Toroku Jitsuyo Shinan Koho     1994-2004
Kokai Jitsuyo Shinan Koho     1971-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-361584 A (Kabushiki Kaisha ATR Chino Kenkyusho), 18 December, 2002 (18.12.02), Page 1, left column (Family: none) | 1-15 |
| A | JP 2002-346958 A (Sony Corp.), 04 December, 2002 (04.12.02), Figs. 1, 2 (Family: none) | 1-15 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July, 2004 (09.07.04) | 27 July, 2004 (27.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

51